(19) Europäisches Patentamt
European Patent Office
Office européen des brevets

(11) EP 4 160 979 A1

(12) # EUROPEAN PATENT APPLICATION
published in accordance with Art. 153(4) EPC

(43) Date of publication:
**05.04.2023 Bulletin 2023/14**

(21) Application number: **21830909.4**

(22) Date of filing: **25.06.2021**

(51) International Patent Classification (IPC):
***H04L 9/16*** *(2006.01)*

(52) Cooperative Patent Classification (CPC):
**H04L 9/0662**

(86) International application number:
**PCT/CN2021/102451**

(87) International publication number:
**WO 2022/001885 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 CN 202010602861**

(71) Applicants:
- **Xu, Zhineng**
**Nanjing, Jiangsu 210042 (CN)**
- **Xu**
**Yefan**
**Nanjing, Jiangsu 210042 (CN)**

(72) Inventors:
- **Xu, Zhineng**
**Nanjing, Jiangsu 210042 (CN)**
- **Xu**
**Yefan**
**Nanjing, Jiangsu 210042 (CN)**

(74) Representative: **Vitina, Maruta et al**
**Agency TRIA ROBIT**
**P.O. Box 22**
**1010 Riga (LV)**

(54) **SEQUENCE ENCRYPTION METHOD FOR COMPOSITE REBUILD OF KEYS**

(57) The present invention discloses a sequence encryption method for reconstructing a key: a set of compound logic is used to construct a chaotic computing structure to realize chaotic bit-segment stream sequence encryption. In the present invention, the chaotic computing structure is used to dispatch a bit fetching logic, a bit metabolic logic, a bit reconstruction logic and other computing logic units to pseudo-randomly reconstruct a construct source and a drive source segment by segment and the drive source is used to pseudo-randomly control the construct source to reconstruct key bit segments bit by bit so as to construct an infinite non-looping regenerated key bit segment sequence that "non-metabolized key bit segment construct source bits are pseudo-randomly picked in a staggered manner or metabolized key bit segment construct source bits are picked in a position-coinciding manner". The core of the present invention: (A) the chaotic computing structure is constructed and a source work pool is metabolized segment by segment in an encryption process so as to pick bits in the construct source for the drive source and the construct source borne by the source work pool segment by segment by controlling the bit fetching logic with bits in the drive source, so that key bit segments are pseudo-randomly reconstructed; (B) the bit fetching logic and the bit metabolic logic are integrated based on the chaotic computing structure to construct a key bit segment infinite non-looping construction logic that "non-metabolized construct source bits are pseudo-randomly picked in a staggered manner or metabolized construct source bits are picked in a position-coinciding manner"; and (C) more than one different regenerated key bit segment sequence is encrypted in a staggered segment superposition manner based on the chaotic computing structure. The present invention has the beneficial effects that: the efficient and high-density security encryption method with wide application space is provided to adapt to breakthrough improvement of the computing power.

EP 4 160 979 A1

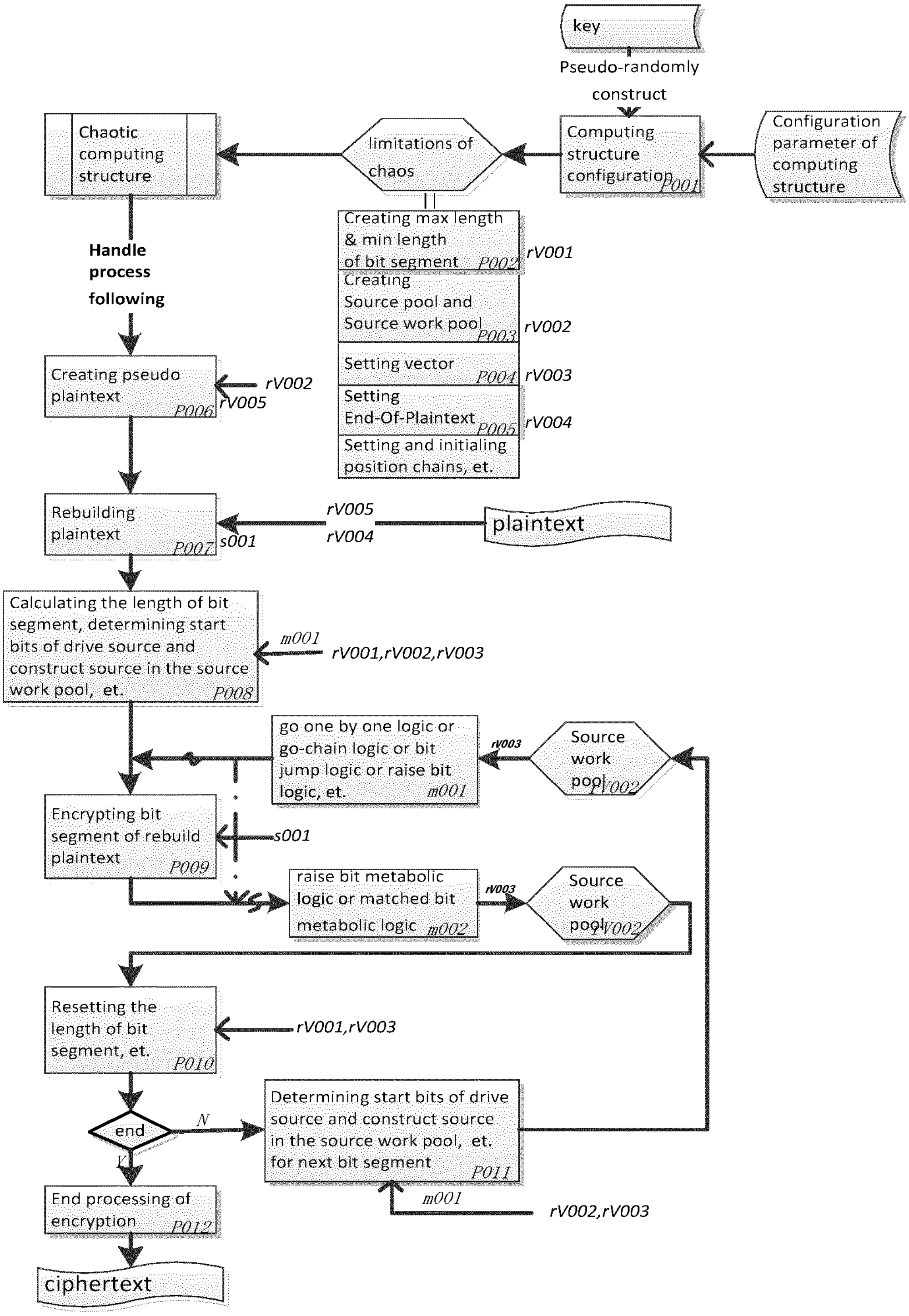
key
Pseudo-randomly construct
Computing structure configuration P001
Configuration parameter of computing structure
limitations of chaos
Chaotic computing structure
Creating max length & min length of bit segment P002
rV001
Creating Source pool and Source work pool P003
rV002
Setting vector P004
rV003
Setting End-Of-Plaintext P005
rV004
Setting and initialing position chains, et.
Handle process following
Creating pseudo plaintext P006
rV002
rV005
Rebuilding plaintext P007
s001
rV005
rV004
plaintext
Calculating the length of bit segment, determining start bits of drive source and construct source in the source work pool, et. P008
m001
rV001,rV002,rV003
go one by one logic or go-chain logic or bit jump logic or raise bit logic, et. m001
rV003
Source work pool rV002
Encrypting bit segment of rebuild plaintext P009
s001
raise bit metabolic logic or matched bit metabolic logic m002
rV003
Source work pool rV002
Resetting the length of bit segment, et. P010
rV001,rV003
end
N
Y
Determining start bits of drive source and construct source in the source work pool, et. for next bit segment P011
m001
rV002,rV003
End processing of encryption P012
ciphertext

Fig. 1

## Description

### TECHNICAL FIELD

The present invention relates to the field of information security and cryptography, in particular to a sequence encryption method for reconstructing a key.

### BACKGROUND OF THE PRESENT INVENTION

The Chinese patent application number: 201710249427.9 discloses a syndrome random reconfiguration key sequence encryption method having adjustability on the basis of a random binary sequence. The method is mainly characterized in that: (1) a seed random sequence is constructed dynamically through existing random sequences; (2) a random key is constructed pseudo-randomly based on fixed-length or variable-length bit segments by using the seed random sequence; (3) the pseudo-random construction process of the random key is accompanied by an encryption process; (4) key-to-plaintext variable-frequency nonlinearity XOR is realized based on transmissibility of an XOR operation; (5) through adjustment of characteristic quantity and other control quantity as well as a pseudo-random construction function, adjustment of key construction is realized, thereby realizing adjustment of encryption density under the condition of not increasing time complexity; and (6) the characteristic quantity and other control quantity used in the syndrome pseudo-random reconfiguration key method cannot be reversed in polynomial time complexity. The basic principle of the method is that randomness of the random sequence is utilized to control the encryption logic process pseudo-randomly to realize full chaos and concealment of the key construction process; and ciphertext analysis approaches are blocked with secret agreements achieved secretly by both encryption/decryption parties.

### SUMMARY OF THE PRESENT INVENTION

The present invention discloses a method of realizing a chaotic computing structure by using a key and structure configuration quantity to configure structure control quantity and then implementing chaotic bit-segment stream sequence encryption by using the chaotic computing structure to dispatch a matched compound logic.

The purpose of the present invention is realized through the following concept: a chaotic computing structure is constructed based on a compound logic to encrypt a plaintext round by round (also called segment by segment) according to variable-length bit segments which are determined pseudo-randomly. In an encryption process, a key bit segment construct source (also called construct source) and a key bit segment drive source (also called drive source) are pseudo-randomly reconstructed segment by segment according to configuration of the computing structure and the drive source is used to pseudo-randomly control the construct source to reconstruct a regenerated key bit segment round by round and bit by bit. Further, regenerated key bit segment sequences which are generated segment by segment are integrated to implement infinite non-looping bit-segment stream sequence encryption. The key to realize the concept target is: a bit fetching logic, a bit metabolic logic and a bit reconstruction logic (including a pseudo-random bit rearrangement logic and a pseudo-random bit flipping logic, see **Description of a number of key points**) are dispatched to reconstruct the regenerated key bit segment sequences that "non-metabolized construct source bits are pseudo-randomly picked in a staggered manner or metabolized construct source bits are picked in a position-coinciding manner" and then: (1) the chaotic computing structure is used to digest periodicity of the regenerated key bit segment sequences generated in a finite set; and (2) the regenerated key bit segment sequences are wound and embedded with pseudo-random bit winding through staggered segment superposition of more than one regenerated key bit segment sequence. The technical solution includes:

(1) the chaotic computing structure is constructed through the structure configuration quantity via the key, to support pseudo-randomly determining sequence encryption bit-segment by bit-segment of all computing parameters;
(2) an initial source work pool is loaded via the key to lead a process of chaotic encryption with logic winding bit-segment by bit-segment;
(3) the source work pool is expanded with a pseudo plaintext independently constructed by an encryption party to make the encryption process further chaotic so as to increase a safety threshold value;
(4) a source work pool round-by-round metabolism mechanism is established and the bit fetching logic and the bit metabolic logic are configured in a matched manner to establish the regenerated key bit segment construction logic that "non-metabolized construct source bits are pseudo-randomly picked in a staggered manner or metabolized construct source bits are picked in a position-coinciding manner";
(5) a probabilistically-occurring periodic law of the constructed regenerated key bit segment sequences is digested with the chaotic computing structure;
(6) different regenerated key bit segment sequences are constructed by using the differentiated construct source, drive source, bit fetching logic and bit metabolic logic and staggered segment superposition encryption with pseudo-random bit winding embedded of the different regenerated key bit segment sequences is realized based on the chaotic computing structure; and

(7) an end-of-plaintext is established based on the key to resolve staggering between a plaintext ending position and a computing ending position and the end-of-plaintext is used as a check code for decryption computing correctness.

In the present invention, according to the structure configuration quantity and the key which are agreed secretly by both encryption/decryption parties, computing structure control quantity (also called structure control quantity) such as an initial value of a dynamic drive vector, a max length/min length of bit segment, a size of a key bit segment source pool (also called source pool) and a size of a pseudo plaintext random string is pseudo-randomly determined; construct sources, drive sources, encrypted bit segment lengths and the like in the source pool are pseudo-randomly updated round by round to construct chaotic regenerated key bit segment sequences; and the chaotic effect is amplified at a power level further through a staggered segment superposition logic structure, so as to integrate infinite non-looping bit-segment stream encryption based on the regenerated key bit segment sequences.

The present invention has the beneficial effects that: the efficient and high-density security encryption method with wide application space is provided to adapt to breakthrough improvement of the computing power.

**Description of a number of key points**

A concept of so-called chaotic computing structure in this description is used in the present invention: an encryption computing track is made chaotic by using computing parameters which pseudo-randomly change in the encryption process, so as to force attackers to face a chaotic computing form. The uncertainty of the chaotic computing structure driven by the key provides wide logic integration space for bit-segment stream sequence encryption. Both the encryption/decryption parties can control pseudo-random change of the encryption/decryption chaotic track based on logic integration, but the attackers face the chaotic track form. The chaotic computing form generated by the chaotic computing structure of the present invention includes the following aspects: pseudo-random change of structure control quantity generated by different keys, pseudo-random change of computing parameters regenerated segment by segment by the structure control quantity in the encryption process, and pseudo-random change of an encryption logic unit integration form (input/output of the bit fetching logic, the bit metabolic logic and the bit reconstruction logic and their match-up effects), a regenerated key bit segment construction form (a length and a construction law) and a regenerated key bit segment integration form (staggered segment superposition and embedding of pseudo-random bit winding) in the encryption process driven by the computing parameters.

The source pool is used in the present invention as a carrier of the construct source and the drive source and contents in the source pool are replaced segment by segment along with the encryption process. Only part of the contents in the source pool is valid at the beginning of encryption, which is called a key bit segment source work pool (also called source work pool) in this description. The source work pool is expanded segment by segment along with reconstruction of regenerated key bit segments until the source pool is fully filled, this stage being called a growth period of the source work pool in this description. The source work pool reaches a mature period after passing the growth period and the source work pool in the mature period is still replaced along with reconstruction of the regenerated key bit segments. In this description, growth of the source work pool in the growth period and replacement in the mature period are collectively referred to as metabolism (also called metabolizing) of the source work pool (also called the source pool).

In the present invention, a pseudo plaintext random string (also called pseudo plaintext) irrelevant to contents of a plaintext is appended in front of the plaintext. The pseudo plaintext has the characteristics that: (1) since the random string has no identifiability, whether an attack on the pseudo plaintext successes or not cannot be identified; the pseudo plaintext is embedded into the source work pool segment by segment in the growth period of the source work pool, and has an effect equivalent to that of the key after the source work pool reaches the mature period; (2) the pseudo plaintext is not a key, but is a random string which is independently constructed by an encryption party to expand the source work pool in the growth period, and is regarded as an invalid code after decryption; and (3) the pseudo plaintext has the effect of making the computing process further chaotic in the encryption process and different pseudo plaintexts lead to differences in the construct source and the drive source when a formal plaintext is encrypted, which further leads to differences in the regenerated key bit segment sequences.

'Picking in a staggered manner' in "non-metabolized construct source bits are pseudo-randomly picked in a staggered manner or metabolized construct source bits are picked in a position-coinciding manner" means bits different in picking position in different times and 'picking in a position-coinciding manner' means bits with the same picking position in different times.

The bit fetching logic and the bit metabolic logic are important constituent logic units for realizing that "non-metabolized construct source bits are pseudo-randomly picked in a staggered manner or metabolized construct source bits are picked in a position-coinciding manner". Their integration effects are indispensable to the infinite non-looping system of the present invention. The compound logic structure of the present invention needs to contain more than one bit fetching logic and bit metabolic logic. Different bit fetching logics and bit metabolic logics can be integrated into computing models of different combinations and a staggered segment superposition logic structure constituted by cooperatively using the different bit fetching logics and bit metabolic logics can improve security of the present invention at a power level. The bit fetching logics listed in the description include a key bit segment go one by one logic (also called go one by one logic), a key bit segment go chain logic (also called go chain logic), a key bit segment bit jump logic (also called bit jump logic) and a key bit segment raise bit logic (also called raise bit logic). The bit metabolic logics listed in this description include a key bit segment source pool raise bit metabolic logic (also called raise bit metabolic logic) and a key bit segment source pool matched bit metabolic logic (also called matched bit metabolic logic). The compound logic structure of the present invention can also contain other bit fetching logics and bit metabolic logics.

Following the principle that "non-metabolized construct source bits are pseudo-randomly picked in a staggered manner or metabolized construct source bits are picked in a position-coinciding manner", the present invention allows to carry out pseudo-random bit rearrangement after bit strings are picked so as to generate the regenerated key bit segments, which is called pseudo-random bit rearrangement ∿ in the description. It is also required by the present invention that the following is carried out on an original metabolic source pseudo-random string (namely an output pseudo-random string output by the bit fetching logic before generation of the regenerated key bit segments, the same below) before the source work pool is metabolized: (1) pseudo-random bit rearrangement, (2) negation of bit values bit by bit (0 to 1, or 1 to 0, also called 0⇔1 exchange), and (3) sugaring. In the description, pseudo-random bit rearrangement, 0⇔1 exchange and sugaring on the original metabolic source pseudo-random string are collectively referred to as pseudo-random bit flipping ≀ (see **Correlation of bit fetching logic and bit metabolic logic**).

A dynamic drive vector is used throughout the computing process in the present invention. The dynamic drive vector is replaced (also called metabolized) round by round. An initial value of the dynamic drive vector used in the description is pseudo-randomly generated by the key and it is still feasible in the present invention to change the initial value into an initial value which is secretly agreed by both the encryption/decryption parties instead of being generated by the key. This does not involve an encryption computing structure, and will not be further described in the description.

Due to pseudo-random change of a length of bit segments in the encryption process, staggering of segmented computing ending positions and plaintext ending positions will be formed with a high probability. The above staggering effect is digested in the present invention in a way that an end-of-plaintext pseudo-randomly constructed by the key is used to calibrate the plaintext ending positions and a pseudo-random string is appended. Since layer-by-layer winding of the encryption/decryption process of the present invention has a conduction effect, any encryption/decryption error will be continued to subsequent computing, leading to that the end-of-plaintext cannot be obtained by decryption due to errors in encryption, transmission and decryption processes, and thus the end-of-plaintext also has the function of a check code.

In order to clearly express the compound logic structure of the present invention, in the description, illustration of a sequence encryption method for reconstructing a key is divided into three logic components: (1) a single reconstruction logic structure, (2) integration of the bit fetching logic and the bit metabolic logic, and (3) a staggered segment superposition logic structure.

The core of the present invention: (A) the chaotic computing structure is constructed and the source work pool is metabolized segment by segment in the encryption process so as to pick bits in the construct source for the drive source and the construct source borne by the source work pool segment by segment by controlling the bit fetching logic with bits in the drive source, so that the regenerated key bit segments are pseudo-randomly reconstructed; (B) the bit fetching logic and the bit metabolic logic are integrated based on the chaotic computing structure to construct the regenerated key bit segment infinite non-looping construction logic that "non-metabolized construct source bits are pseudo-randomly picked in a staggered manner or metabolized construct source bits are picked in a position-coinciding manner"; and (C) more than one different regenerated key bit segment sequence is encrypted in a staggered segment superposition manner based on the chaotic computing structure.

The chaotic computing structure expands the effect that "non-metabolized construct source bits are pseudo-randomly picked in a staggered manner or metabolized construct source bits are picked in a position-coinciding manner" and the expanding effect of the chaotic computing structure can only be clearly seen on the basis of knowing the basis operation principle that "non-metabolized construct source bits are pseudo-randomly picked in a staggered manner or metabolized construct source bits are picked in a position-coinciding manner". Therefore, in the description, illustration of the expanding effect of the chaotic computing structure is inserted after describing integration of the bit fetching logic and the bit metabolic logic.

As embodiments of the present invention, in this description, a non-superposition & single metabolic model with the configuration of the go one by one logic/raise bit metabolic logic is selected as embodiment 1 and a double-superposition & double-metabolic staggered segment superposition model with the configuration of the go chain logic/raise bit metabolic logic and the bit jump logic/matched bit metabolic logic is selected as embodiment 2. Other combination models are not excluded.

Some logic units (also called logic steps) of the present invention can be omitted or not omitted, which depends on different logic matching (e.g., pseudo-random bit rearrangement ∿ can be omitted or not depending on different conditions). Except for specific conditions, drawings of the description will show them in a non-omitted manner. Because these logic units are still part of the logic structure, showing them facilitates clearly seeing logic correlation.

In this description, a position chain has three expressing ways: (1) pos_chain, (2) pos_chain(j), j=0, 1, 2, ... $L_{max}$-$L_{min}$, and (3) pos_chain(j,k), j=0, 1, 2, ... $L_{max}$-$L_{min}$ and k=0, 1, 2, ..., $L_{min}$+j-1. Among them, (1) is generally used for a position chain set; (2) is used for a set constituted by all position chains; and (3) is used for a position element set. In addition, pos_chain(j) refers in particular to a certain position chain calibrated by j and pos_chain(j,k) refers in particular to a certain position element calibrated by j and k. In the description, a dedicated form, namely a position chain pos_chain(r), r=0, 1, ..., 2s-2, is adopted for expressing a position chain of the staggered segment superposition logic structure with pseudo-random bit winding embedded. Here, r is not a number of a position chain in a position chain set pos_chain(j), j=0, 1, 2, ... $L_{max}$-$L_{min}$, instead, it is a position chain pos_chain($ls_i$-$L_{min}$) at the $r^{th}$ time of metabolism during repeated 2s-1 times of metabolism on the ($ls_i$-$L_{min}$)$^{th}$ position chain pos_chain($ls_i$-$L_{min}$) in the position chain set (see notes of 4.5.3.2 and 4.5.4.4 in **staggered segment superposition logic structure).**

Unified catalog numbers (e.g., above 4.5.3.2) are adopted in the description part (before embodiments) of the description. New catalog numbers are respectively adopted for the embodiments according to subjects. Except catalog numbers indicating subject prefixes (for example: 'encryption/decryption computing formula and computing unit 7 of embodiment 1'), catalog numbers in description texts of other embodiments all refer to catalog numbers of the current subject (for example: 'repeating steps 11 to 19' ... in **decryption** 20 in **encryption/decryption process control of embodiment 2** refers to **decryption** 11 to 19 of embodiment 2).

The description is illustrated with feasible but not unique computing formulas and computing parameters, and does not exclude other equivalent configurations following the concept of the present invention. It can be understood that the equivalent replacement, change or simplification of the technical solution and the inventive concept of the present invention shall belong to the protection scope of the appended claims of the present invention.

## BRIEF DESCRIPTION OF THE DRAWINGS

Fig. 1 is a schematic diagram of a single reconstruction logic structure.
Fig. 2 is a schematic diagram of matched work of a go one by one logic and a raise bit metabolic logic.
Fig. 3 is a schematic diagram of matched work of a go chain logic and a matched bit metabolic logic.
Fig. 4 is a schematic diagram of matched work of a bit jump logic and a matched bit metabolic logic.
Fig. 5 is a schematic diagram of a raise bit metabolic effect.
Fig. 6 is a schematic diagram of a matched bit metabolic effect.
Fig. 7 is a schematic diagram of a simple staggered segment superposition logic structure.
Fig. 8 is a schematic diagram of a staggered segment superposition logic structure with pseudo-random bit winding embedded.
Fig. 8' is a schematic diagram of a computing process of a staggered segment superposition logic with pseudo-random bit winding embedded.
Fig. 9 is a schematic diagram of a staggered segment superposition logic structure with pseudo-random bit winding embedded different from an embedding position in Fig. 8.

## DETAILED DESCRIPTION OF THE PRESENT INVENTION

### Illustration of a sequence encryption method for reconstructing a key

A compound logic structure of the present invention is the basis for realizing regenerated key bit segment sequences which are reconstructed and their integration. In order to clearly express the compound logic structure of the present invention, in the description, the compound logic structure is divided into three logic components (**a single reconstruction logic structure, integration of a bit fetching logic and a bit metabolic logic, and a staggered segment superposition logic structure**) for description. Since the effect of digesting periodicity of the regenerated key bit segment sequences of a chaotic computing structure is based on the **integration of the bit fetching logic and the bit metabolic logic, expanding of the chaotic computing structure on an effect that "non-metabolized con-**

**struct source bits are pseudo-randomly picked in a staggered manner or metabolized construct source bits are picked in a position-coinciding manner"** is inserted after describing the **integration of the bit fetching logic and the bit metabolic logic.** The **staggered segment superposition logic structure** is a compound effect of the chaotic computing structure of the present invention for achieving the goal of the inventive concept.

1. **Single reconstruction logic structure**

The single reconstruction logic structure realizes a process of reconstructing the regenerated key bit segment sequences through pseudo-random dispatching by a key: during pre-processing at the beginning of encryption/decryption, structure configuration quantity secretly agreed by both encryption/decryption parties is used in the present invention in combination with key configuration structure control quantity to support the structure control quantity to pseudo-randomly reconstruct computing parameters segment by segment in an encryption/decryption process so as to control each logic unit. In the encryption/decryption process, the chaotic computing structure realized based on this control cooperates with the bit fetching logic and the bit metabolic logic to jointly support operation that "non-metabolized key bit segment construct source bits are pseudo-randomly picked in a staggered manner or metabolized key bit segment construct source bits are picked in a position-coinciding manner".

A correlation of all computing units in the regenerated key bit segment sequences constructed in the present invention is introduced in combination with Fig. 1:

1.1 Fig. 1 shows an encryption process. Since a decryption process only (1) has non-structural differences with the encryption process during pre-processing and postprocessing and (2) has non-structural differences with a metabolic source in a growth period of a source work pool, the decryption process is omitted and is described only when required.

1.2 In Fig. 1, 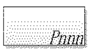 represents a computing unit identified by Pnnn; rvnnn represents output of one Pnnn; 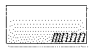 particularly represents the bit fetching logic or the bit metabolic logic; s001 represents an encrypted object; ← represents structure control quantity (e.g., rV002) and a drive source (e.g., key) of a pointed computing unit; represents a connection relation between the computing units; 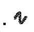 particularly represents one pseudo-random bit rearrangement;  particularly represents one pseudo-random bit flipping; and 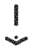 particularly represents pseudo-random bit flipping  carried out by an original metabolic source pseudo-random string.

1.3 The structure control quantity is pseudo-randomly configured through the structure configuration quantity and the key which are secretly agreed by both the encryption/decryption parties, such as a max length of bit segment ($L_{max}$) and a min length of bit segment ($L_{min}$) labeled as rV001 $^{P002}$; a length of a source pool (Spool) and an initial length of the source work pool ($Spool_{work}$) labeled as rV002 $^{P003}$; an initial value ($vector_0$) of a dynamic drive vector labeled as rV003 $^{P004}$; and an end-of-plaintext (EOP) and a start position chain set pos_chain labeled as rV004 $^{P005}$, and the like.

1.4 The chaotic computing structure is configured by using the structure configuration quantity and pre-processing is performed:

1.4.1 The length of the source pool Spool and the initial length of the source work pool $Spool_{work}$ are configured according to the structure configuration quantity $ctl_{init}$ and an initial content of the source work pool $Spool_{work}$ is loaded through the key.

1.4.2 A pseudo plaintext (pM) labeled as rV005 is generated in proportion according to the length of the source pool Spool $^{P006}$.

1.4.3 The pseudo plaintext, a plaintext and the end-of-plaintext EOP are spliced and a supplementing pseudo-random string $ms_{additn}$ with a length of $L_{max}$ is appended, so as to reconstruct a rebuild plaintext s001 (also called plaintext M or rebuild plaintext M) $^{P007}$.

1.4.4 A length (collectively referred to as a bit segment length $ls_i$, also called $ls_i$) of a regenerated key bit segment, a plaintext bit segment and a ciphertext bit segment in the first round is computed by using an initial dynamic drive vector $vector_0$; start positions of a construct source and a drive source in the source work pool are determined according to a selected bit fetching logic m001; an initial metabolic target area in the source pool is determined according to a selected bit metabolic logic m002; and other computing parameters are reconstructed. P008

1.5 The regenerated key bit segment is reconstructed and encryption computing is performed

1.5.1 A rebuild plaintext bit segment is picked in a postponed manner based on a previous plaintext bit segment $M_{i-1}$ through $ls_i$ obtained by computing rV001.
1.5.2 An output pseudo-random string is picked pseudo-randomly from the source work pool ($Spool_{work}$) by using the bit fetching logic m001 according to $ls_i$ obtained by computing rV001.

1.5.3 Pseudo-random bit rearrangement is performed (or not performed) on the output pseudo-random string obtained in 1.5.2 through an equal-length position chain pos_chain($ls_i$-$L_{min}$) (for example: values of bits of the output pseudo-random string specified by position elements in the position chain are spliced in sequence) to obtain a regenerated key bit segment $\underline{bsk_i}$ of the current round.

1.5.4 A plaintext bit segment $M_i$ is subjected to XOR computing by using the regenerated key bit segment $\underline{bsk_i}$ P009.

1.5.5 Metabolism of source work pool
1.5.5.1 Metabolism in growth period (length($Spool_{work}$)<length(Spool)) of source work pool

A pseudo plaintext bit segment $pM_i$ with a length of $ls_i$ is appended to a tail of the source work pool or pseudo-randomly inserted into the source work pool bit by bit in sequence during encryption until the source work pool reaches a mature period.

A pseudo plaintext bit segment $pM_i$ with a length of $ls_i$ obtained in decryption is appended to the tail of the source work pool or pseudo-randomly inserted into the source work pool bit by bit during decryption until the source work pool reaches the mature period.

(Note: a length of the last computing bit segment in the growth period is greater than a length of remaining pseudo plaintext sub-strings with high probability and at the moment, only the remaining pseudo plaintext sub-strings are appended to the tail of the source work pool or pseudo-randomly inserted into the source work pool bit by bit. See 2.6 for details)

1.5.5.2 Metabolism in mature period (length($Spool_{work}$)=length(Spool)) of source work pool

1.5.5.2.1 Pseudo-random bit flipping is performed on the original metabolic source pseudo-random string (output of m001 in Fig. 1) through an equal-length position chain pos_chain($ls_i$-$L_{min}$) (pseudo-random rearrangement therein must be different from 1.5.3. For example: the position chain pos_chain($ls_i$-$L_{min}$) is metabolized first before pseudo-random bit rearrangement) to generate a metabolic source pseudo-random string.
1.5.5.2.2 The source work pool $Spool_{work}$ is metabolized by using the metabolic source pseudo-random string obtained in 1.5.5.2.1 and the bit metabolic logic m002.
1.6 i=i+1, the next segment of reconstructed and encrypted computing parameter is pseudo-randomly reset P010 P011 and the next segment of encryption is implemented (circularly executing 1.5) until a length of remaining non-rebuild plaintexts is less than or equal to the max length of bit segment $L_{max}$.
1.7 Postprocessing P012
1.7.1 Remaining bit strings behind a plaintext computing ending position are spliced to a ciphertext during encryption.
1.7.2 The pseudo plaintext pM, the end-of-plaintext EOP and the supplementing pseudo-random string $ms_{additn}$ behind are cleared during decryption.

2. Integration of bit fetching logic and bit metabolic logic

The integration of the bit fetching logic and the bit metabolic logic includes correlated control over the bit fetching logic and the bit metabolic logic and a bit reconstruction logic (including a pseudo-random bit rearrangement logic and a pseudo-random bit flipping logic) supporting this correlated control, metabolism and initialization of a position chain pos _chain and metabolism of a dynamic drive vector $vector_i$.

In order to express correlation between the bit fetching logic and the bit metabolic logic, Fig. 2, Fig. 3 and Fig. 4 all show the two in a staggered manner.

The bit fetching logic and the bit metabolic logic are regulated by the chaotic computing structure. The chaotic computing structure, the bit fetching logic and the bit metabolic logic jointly support infinite non-looping operation that "non-metabolized construct source bits are pseudo-randomly picked in a staggered manner or metabolized construct source bits are picked in a position-coinciding manner".

**Bit fetching logic**

2.1 Go one by one logic

The go one by one logic is introduced in combination with Fig. 2.

2.1.1 Fig. 2 shows the go one by one logic of the $i^{th}$ regenerated key bit segment (first line) and the $(i+1)^{th}$ regenerated key bit segment (third line). Fig. 2 also shows a raise bit metabolic logic of the $i^{th}$ round (second line) and the $(i+1)^{th}$ round (fourth line) implemented in a staggered manner with the go one by one logic. A start byte C of a construct source of the $(i+1)^{th}$ regenerated key bit segment is formed by postponing a start byte C of a construct source of the $i^{th}$ regenerated key bit segment by one byte (it continues from the beginning after postponing to the tail of the source work pool).

2.1.2 In computing of each round, a start byte C is constructed to serve as a first construction byte $pickstart_{i,0}$ (▼) and $ls_i$ bytes (bytes to which ▼ belongs, and continuing from the beginning after reaching the tail of the source work pool) beginning from it are used as a construct source $pickarea_i$ (C-D). A position spaced from C by a determined length is used as a first construction drive position $pickdrivstart_{i,0}$ (E) and a bit sub-string composed of n (3 or 4 or 8) times of bits of $ls_i$ beginning from it is used as a drive source $pickdrivearea_i$ (continuing from the beginning after reaching the tail of the source work pool) to obtain $ls_i$ drive elements - (3 or 4 or 8 bits).

2.1.3 Values of 3 bits which have determined positions or are pseudo-randomly positioned are picked from each drive element to serve as drive values so as to obtain a drive value sequence $pickdriver_i(j)$ (j=0, 1, 2, ..., $ls_i$-1).

2.1.4 The drive values in the drive value sequence and bytes in the construct source are sequentially paired to obtain a drive value/construction byte pair sequence $pickdriver_i(j)/pickarea_i(j)$ (j=0, 1, 2, ..., $ls_i$-1).

2.1.5 Values of bits of the construction bytes specified by the drive values are sequentially picked from the drive value/construction byte pair sequence $pickdriver_i(j)/pickarea_i(j)$ (j=0, 1, 2, ..., $ls_i$-1) and are spliced into an output pseudo-random string tmp_str(j) (j=0, 1, 2, ..., $ls_i$-1).

2.1.6 According to 1.5.3 of the **single reconstruction logic structure,** the above output pseudo-random string tmp_str(j) (j=0, 1, 2, ..., $ls_i$-1) is (or not) subjected to pseudo-random bit rearrangement ∿ to obtain a regenerated key bit segment $\underline{bsk}_i$.

2.2 Go chain logic

The go chain logic is different from the go one by one logic that an order of sequentially arranged byte segments in the construct source is changed to an order of arranging according to position elements in the position chain.

The go chain logic is introduced in combination with Fig. 3:

2.2.1 $L_{max}$-$L_{min}$+1 position chains pos_chain(j), j=0, 1, ..., $L_{max}$-$L_{min}$ (e.g., Set of pos_chain shown in Fig. 3) with lengths from $L_{min}$ to $L_{max}$ are constructed in the **single reconstruction logic structure** 3 (after P005) and initialized into $L_{max}$-$L_{min}$+1 pseudo-randomly arranged position chains pos_chain(j) (j=0, 1, 2, ..., $L_{max}$-$L_{min}$) (see 5.2 for details).

2.2.2 Fig. 3 shows the go chain logic of the $i^{th}$ regenerated key bit segment (first line) and the $(i+1)^{th}$ regenerated key bit segment (third line). Fig. 3 also shows a matched bit metabolic logic of the $i^{th}$ round (second line) and the $(i+1)^{th}$ round (fourth line) implemented in a staggered manner with the go chain logic. A start byte C of a construct source of the $(i+1)^{th}$ regenerated key bit segment is formed by postponing a start byte C of a construct source of the $i^{th}$ regenerated key bit segment by one byte (it continues from the beginning after postponing to the tail of the source work pool).

2.2.3 The drive source $pickdrivearea_i$, the construct source $pickarea_i$ and the drive value sequence $pickdriver_i(j)$ (j=0, 1, 2, ..., $ls_i$-1) are established according to the same method as the go one by one method.

2.2.4 The position elements in the position chain pos_chain($ls_i$-$L_{min}$) and the drive values in the drive value sequence are sequentially matched and then drive value/construction byte matching is realized through positions of the construction bytes in the construct source specified by the position elements to obtain a drive value/construction byte matching pair $pickdriver_i(j)/pickarea_i$(pos_chain($ls_i$-$L_{min}$,j)) (j=0, 1, 2, ..., $ls_i$-1).

2.2.5 Values of bits of the construction bytes specified by the drive values are sequentially picked from the drive value/construction byte matching pair $pickdriver_i(j)/pickarea_i$(pos_chain($ls_i$-$L_{min}$,j)) (j=0, 1, 2, ..., $ls_i$-1) and are spliced into an output pseudo-random string tmp_str(j) (j=0, 1, 2, ..., $ls_i$-1).

2.2.6 According to 1.5.3 of the **single reconstruction logic structure,** the output pseudo-random string tmp_str(j) (j=0, 1, 2, ..., $ls_i$-1) obtained in 2.2.5 is (or not) subjected to pseudo-random bit rearrangement ∿ to obtain a regenerated key bit segment $\underline{bsk_i}$.

2.3 Bit jump logic;

The bit jump logic is introduced in combination with Fig. 4:

2.3.0 For clear showing, in Fig. 4, ranges of the construct source and the drive source are compressed and divided. Please expand the ranges of the two to the entire source work pool after the logic relationship is clear.

2.3.1 Fig. 4 shows a diagram of the bit jump logic of the $i^{th}$ regenerated key bit segment (first line) and the $(i+1)^{th}$ regenerated key bit segment (second line). Fig. 4 also shows the matched bit metabolic logic of the $i^{th}$ round (first line) and the $(i+1)^{th}$ round (second line) implemented in a staggered manner with the bit jump logic.

2.3.2 The construct source $pickarea_i$ and the drive source $pickdrivearea_i$ are determined: the construct source $pickarea_i$ is formed by splicing bit strings from a construct source start position $pickstart_{i,0}$ to a tail of a source pool and bit strings from a head of the source pool to the construct source start position $pickstart_{i,0}$. The construct source start position $pickstart_{i,0}$ in each round is pseudo-randomly determined by the dynamic drive vector $vector_i$ (for example, a modulo operation is performed by using a value represented by the dynamic drive vector $vector_i$ according to a length of the source work pool $length(Spool_{work})$). The drive source $pickdrivearea_i$ is formed by splicing bit strings from a drive source start position $pickdrivstart_{i,0}$ to the tail of the source pool and bit strings from the head of the source pool to the drive source start position $pickdrivstart_{i,0}$. The drive source start position $pickdrivstart_{i,0}$ in each round and the construct source start position $pickstart_{i,0}$ are spaced by a fixed or pseudo-randomly determined relative segment difference dif ($0<dif \leq length(Spool_{work})$): $pickdrivstart_{i,0}=(pickstart_{i,0}+length(Spool_{work})-dif)\%length(Spool_{work})$.

2.3.3 $ls_i$ bit strings with a determined length are picked sequentially or in a pseudo-random jumping manner from the drive source start position $pickdrivstart_{i,0}$ to constitute a bit jump value sequence junp_num(j) (j=0, 1, 2, ..., $ls_i$-1) (it continues from the beginning after reaching the tail of the source work pool).

2.3.4 Construction bits are determined in the construct source jump-value by jump-value junp_num(j) in a jumping manner from the construct source start position $pickstart_{i,0}$ according to the bit jump value sequence junp_num(j) (j=0, 1, 2, ..., $ls_i$-1) (it continues from the beginning after reaching a tail of the construct source) and values of the bits are picked to be spliced into an output pseudo-random string tmp_str(j) (j=0, 1, 2, ..., $ls_i$-1).

2.3.5 The constructed output pseudo-random string tmp_str(j) (j=0, 1, 2, ..., $ls_i$-1) is used and subjected to (or not) pseudo-random bit rearrangement ∿ to be used as a regenerated key bit segment $\underline{bsk_i}$.

2.4 Raise bit logic

The raise bit logic has the characteristic that non-picked bits do not exist in a rotation cycle (namely a repeating cycle that the construct source advances in byte round by round in the source work pool) of the construct source, so that regenerated key bit segment sequences have the higher use rate of the source work pool.

2.4.1 A construct source start byte $pickstart_0$ in a first round is pseudo-randomly determined through an initial dynamic drive vector $vector_0$. Then a construct source start byte $pickstart_i$ in each round is postponed by one byte round by round (it continues from the beginning after postponing to the tail end of the source work pool), wherein $pickstart_i=(pickstart_{i-1}+8)\%length(Spool_{work})$.

2.4.2 The construct source $pickarea_i$ in each round is constituted by $ls_i$ bytes postponing from the construct source start byte $pickstart_i$ (it continues from the beginning after postponing to the tail end of the source work pool).

2.4.3 A picked bit of the first construction byte in the above construct source $pickarea_i$ is made to be the first bit of the byte and then is increased by one bit byte by byte (it continues from 0 after reaching 7) to be used as picked bits of all the construction bytes and values of the picked bits are spliced into an output pseudo-random string tmp_str(j) (j=0, 1, 2, ..., $ls_i$-1).

2.4.4 The constructed output pseudo-random string tmp_str(j) (j=0, 1, 2, ..., $ls_i$-1) is used and subjected to (or not) pseudo-random bit rearrangement ∿ to be used as a regenerated key bit segment $\underline{bsk_i}$.

Bit metabolic logic

The bit metabolic logic is one of the keys to realize the present invention. Two bit metabolic logics are introduced in the description: the raise bit metabolic logic and the matched bit metabolic logic. As for the compound logic structure of the present invention, several other metabolic logics related to the bit metabolic logics further need to be described: metabolism of bits of the source work pool in the growth period, metabolism of the dynamic drive vector $vector_i$ and metabolism of the position chain pos_chain.

2.4 Raise bit metabolic logic

The raise bit metabolic logic has the characteristic that non-metabolizing bits do not exist in a rotation cycle (namely a repeating cycle that a metabolic target area advance in byte round by round in the source work pool) of the metabolic target area, so that the source work pool has the higher coverage on sets of natural numbers.

The raise bit metabolic logic is introduced in combination with Fig. 2 and Fig. 5.

2.4.1 As shown in Fig. 2, an original metabolic source pseudo-random string (namely the output pseudo-random string tmp_str(j), j=0, 1, 2, ..., $ls_i$-1 picked from the source work pool by the bit fetching logic) is subjected to pseudo-random bit flipping to obtain a metabolic source pseudo-random string metabolsrci(j) (j=0, 1, 2, ..., $ls_i$-1).

2.4.2 As shown in Fig. 2, a byte overlapped with a start position E of the drive source is selected (not excluding other bytes) as a start byte $metabolstart_i$ of the raise bit metabolic target area.

2.4.3 As shown in Fig. 2, byte segments (E-F) constituted by $ls_i$ bytes beginning from the start byte $metabolstart_i$ (E) of the raise bit metabolic target area are used a raise bit metabolic target area $metabolarea_i$, namely all bytes calibrated by in the drawing.

2.4.4 As shown by in Fig. 5, it is set that a metabolizing bit in the first byte of the raise bit metabolic target area $metabolarea_i$ is the first bit of the first byte and then is increased by one bit byte by byte (it continues from 0 after reaching 7) to be used as metabolizing bits of all bytes in the raise bit target area so as to obtain a metabolizing bit sequence $metabolbit_i$(j) (j=0, 1, 2, ..., $ls_i$-1).

2.4.5 As shown by in Fig. 5, values of the metabolizing bits of all the bytes in the raise bit target area are replaced with values of bits of the metabolic source pseudo-random string $metabolsrc_i$(j) (j=0, 1, 2, ..., $ls_i$-1) in 2.4.1, wherein $metabolbit_i$(j)=$metabolsrc_i$(j) (j=0, 1, 2, ..., $ls_i$-1).

2.5 Matched bit metabolic logic

The matched bit metabolic logic is introduced in combination with Fig. 4:

As shown in Fig. 4, in the matched bit metabolic logic, picked bits and the metabolizing bits are overlapped.
2.5.1 When the output pseudo-random string tmp_str(j) (j=0, 1, 2, ..., $ls_i$-1) is constructed through any bit fetching logic, all extraction bits are reserved to serve as a picked bit sequence $pickedbit_i$(j) (j=0, 1, 2, ..., $ls_i$-1).

2.5.2 Pseudo-random bit flipping is performed on the original metabolic source pseudo-random string by using the position chain pos_chain($ls_i$-$L_{min}$) (j=0, 1, 2, ..., lsi-1) to obtain a metabolic source pseudo-random string metabolsrci(j) (j=0, 1, 2, ..., $ls_i$-1).

2.5.3 The picked bit sequence $pickedbit_i$(j) (j=0, 1, 2, ..., $ls_i$-1) is metabolized one by one through the metabolic source pseudo-random string metabolsrci(j) (j=0, 1, 2, ..., $ls_i$-1), wherein $pickedbit_i$(j)= $metabolsrc_i$(j) (j=0, 1, 2, ..., $ls_i$-1).

2.6 Metabolism of bits of the source work pool in the growth period

2.6.1 During encryption, a pseudo plaintext bit segment $pM_i$ which is generated by an encryption party and has a length equal to or less than $ls_i$ ($pM_i$=$ls_i$ when a length of remaining pseudo plaintexts postponed in sequence is greater than or equal to $ls_i$; $pM_i$=length of remaining pseudo plaintexts when the length of the remaining pseudo plaintexts postponed in sequence is less than $ls_i$) is appended to the tail of the source work pool or pseudo-randomly inserted into the source work pool bit by bit in sequence. A length of the source work pool is increased length($Spool_{work}$)=length($Spool_{work}$)+length($pM_i$).

2.6.2 During decryption, a pseudo plaintext bit segment $pM_i$ which is obtained by decryption and has a length equal to or less than $ls_i$ ($pM_i$=$ls_i$ when the length of the remaining pseudo plaintexts postponed in sequence is greater than or equal to $ls_i$; $pM_i$=length of remaining pseudo plaintexts when the length of the remaining pseudo plaintexts postponed in sequence is less than $ls_i$) is appended to the tail of the source work pool or pseudo-randomly inserted into the source work pool bit by bit. The length of the source work pool is increased at the same time length($Spool_{work}$)=length($Spool_{work}$)+length($pM_i$).

Notes: in 2.6.1 and 2.6.2, a pseudo-random algorithm that the pseudo plaintext bit segment $pM_i$ is pseudo-randomly inserted into the source work pool bit by bit is allowed to be arbitrary, because keys and pseudo plaintexts are both random strings and have no identifiability.

2.7 Metabolism of the position chain (pos_chain)

There are many feasible methods for metabolism of the position chain. In this description, a method of determining randomness of the position chain through randomness of the source work pool is introduced.

2.7.1 An empty transitional position chain tmp_chain with a length of (1/2) length($vector_i$) is established.

2.7.2 Values represented by every two bits of the dynamic drive vector $vector_i$ are sequentially picked to be used as jump values so as to obtain a jump value sequence $rp_j$ (j=0, 1, ..., (1/2)length($vector_i$)-1).

2.7.3 It is set that $p_0=rp_0$, $p_j=p_{j-1}+rp_j+1$,
tmp_chain(j)=pos_chain($ls_i$-$L_{min}$, $p_j$), a position element pos_chain($ls_i$-$L_{min}$, $p_j$), j=0, 1, ..., min((1/2)length($vector_i$)-1, $ls_i$-1) is removed j by j from the position chain (pos_chain($ls_i$-$L_{min}$)).

Therefore, pos_chain($ls_i$-$L_{min}$) is partially or completely guided into tmp_chain.

2.7.4 When (1/2)length($vector_i$) < $ls_i$, (1/2)length($vector_i$) position elements in the transitional position chain tmp_chain are appended behind $ls_i$-(1/2)length($vector_i$) of the position chain pos_chain($ls_i$-$L_{min}$); and when (1/2)length($vector_i$) ≥ $ls_i$, the position chain pos_chain($ls_i$-$L_{min}$) is directly replaced with the transitional position chain tmp_chain.

2.8 Metabolism of the dynamic drive vector $vector_i$

Metabolism of the dynamic drive vector $vector_i$ is one of the keys to guarantee randomness of the reconstructed regenerated key bit segments. There are many methods for metabolism of the dynamic drive vector $vector_i$. Two methods of determining randomness of the dynamic drive vector $vector_i$ through randomness of the source work pool are exemplified in the description:

2.8.1 The dynamic drive vector $vector_i$ is obtained in a way of backwards postponing byte segments of an original picked dynamic drive vector $vector_{i-1}$ in the source work pool by one byte round by round (it continues from the beginning after reaching the tail of the source work pool).

2.8.2 The initial dynamic drive vector $vector_0$ is picked from the source work pool or secretly agreed by both encryption/decryption parties. A dynamic drive vector $vector_{i-1}$ in the previous round and an equal-length bit string different from the dynamic drive vector $vector_{i-1}$ in the previous round in position and pseudo-randomly determined in the source work pool are subjected to XOR round by round to generate a new dynamic drive vector $vector_i$.

**Correlation of the bit fetching logic and the bit metabolic logic**

2.9 Matched use of the bit fetching logic and the bit metabolic logic

The description shows four bit fetching logics and two bit metabolic logics and does not exclude other bit fetching logics and bit metabolic logics.

The matched use of the bit fetching logic and the bit metabolic logic is one of the keys to realize the infinite non-looping regenerated key bit segment sequences that "non-metabolized construct source bits are pseudo-randomly picked in a staggered manner or metabolized construct source bits are picked in a position-coinciding manner". Different matching of the two can construct different regenerated key bit segment sequences and realize different coverage of the regenerated key bit segment sequences on sets of natural numbers. Its effect is particularly obvious in staggered segment superposition encryption of a plurality of regenerated key bit segment sequences.

As for the bit fetching logics and the bit metabolic logics listed in the description, there are totally eight available matches. To avoid repeated description, Figs. 2, 3 and 4 each show one match, which basically covers features of various matches. Fig. 2 shows a matched work state of the go one by one logic and the raise bit metabolic logic. Fig. 3 shows a matched work state of the go chain logic and the matched bit metabolic logic. Fig. 4 shows a matched work state of the bit jump logic and the matched bit metabolic logic.

2.9.1 The bit fetching logic directly acts on encryption of the current round and the bit metabolic logic affects encryption of subsequent rounds.

2.9.2 The higher the randomness of the bit metabolic logic for metabolism of the source work pool, the higher the coverage of the regenerated key bit segment sequences on the sets of natural numbers. The higher the coverage of the regenerated key bit segment sequences on the sets of natural numbers, the closer to a perfect secrecy system of the present invention.

2.9.3 As for the raise bit logic, the matched bit metabolic logic and the raise bit metabolic logic are the same when a selected metabolic target area and the construct source are overlapped.

2.9.4 As for the raise bit metabolic logic, except matching with the raise bit logic, the randomness of the regenerated key bit segments in following rounds is high when a start position of the selected metabolic target area is the start position of the drive source.

2.9.5 By adopting the matched bit metabolic logic, it is guaranteed that non-metabolized bits at coinciding positions do not exist in the source work pool. Non-metabolized bits at coinciding positions also do not exist in the source work pool when the raise bit logic and the raise bit metabolic logic are matched.

2.9.6 When the raise bit metabolic logic and a non raise bit logic are matched, although non-metabolized bits at coinciding positions will occur in the source work pool in the current round, since the construct source does not have non-metabolized bits in the rotation cycle of the source work pool, the raise bit metabolic logic has the higher overall metabolic rate for the source work pool in a round-by-round encryption process, which makes the source work pool have higher coverage for the sets of natural numbers.

2.9.7 Fig. 6 comparatively shows differences of matching of a non go chain logic/the matched bit metabolic logic and matching of the go chain logic/matched bit metabolic logic. In the former, extraction bits and metabolizing bits correspond in order. In the latter, extraction bits and metabolizing bits are pseudo-randomly staggered since the extraction bits are arranged according to a sequence specified by the position chain.

2.9.8 In a single reconstruction encryption model, the raise bit logic will probabilistically form security holes, thereby being not suitable for use in the single reconstruction encryption model. However, since the raise bit logic has the higher use rate of the source work pool, the effect of mixing the raise bit logic and the non raise bit logic is better in staggered segment superposition encryption of a plurality of regenerated key bit segment sequences.

2.9.9 In order to guarantee that ‘metabolized construct source bits are picked in a position-coinciding manner’, the bit metabolic logic matched with the raise bit logic must be the raise bit metabolic logic.

2.9.10 Pseudo-random bit rearrangement ∿ on the output pseudo-random string before the regenerated key bit segments are generated is optional (optional herein refers to that not choosing pseudo-random bit rearrangement ∿ does not damage feasibility of a running structure of the present invention). Pseudo-random bit rearrangement in pseudo-random bit flipping ς on the original metabolic source pseudo-random string before metabolism of the source work pool is necessary. Using pseudo-random bit rearrangement ∿ and pseudo-random bit flipping ς at the same time and guaranteeing that pseudo-random bit rearrangement in the latter is mutually different from the former will improve breaking attack difficulty (mutual deduction between the regenerated key bit segments and the metabolic source pseudo-random string is blocked).

2.9.11 Pseudo-random bit flipping ς has three purposes: guaranteeing that ‘metabolized construct source bits are picked in a position-coinciding manner’, digesting diffusion of nonuniform distribution of ’0’ and ’1’ in the source work pool and avoiding absolutely uniform distribution of ’0’ and ’1’ in the source work pool. Adopted technical means includes: pseudo-random bit rearrangement, bit-by-bit 0⇔1 exchange at the same time of pseudo-random bit rearrangement, and intermittent sugaring.

Pseudo-random bit rearrangement aims to update ’0’/’1’ arrangement based on an original ’0’/’1’ proportion in the source work pool.

Bit-by-bit 0⇔1 exchange at the same time of pseudo-random bit rearrangement aims to digest ’0’ and ’1’ bit value proportion imbalance which probabilistically occurs in the source work pool and to block diffusion of this imbalance when the regenerated key bit segment sequences are constructed.

Sugaring means that: an entire ’0’ or entire ’1’ bit string is triggered to replace the metabolic source pseudo-random string by using a pseudo-random change characteristic of the computing parameters in the chaotic computing structure according to intermittent states of the computing parameters (e.g.: (a) when a position element at a specific position in the position chain is equal to 0 or $ls_i$; or (b) when a value of a certain determined byte of the dynamic drive vector $vector_i$ is equal to 0 or $ls_i$; and (c) when the above (a) or (b) is combined without conflict, (a) or (b) being combined without conflict means: (1) a position element at a specific position in the position chain is equal to 0 and/or a value of a certain determined byte of the dynamic drive vector $vector_i$ is equal to 0; (2) a position element at a specific position in the position chain is equal to $ls_i$ and/or a value of a certain determined byte of the dynamic drive vector $vector_i$ is equal to $ls_i$; and (3) a position element at a specific position in the position chain being equal to 0 and a value of a certain determined byte of the dynamic drive vector $vector_i$ being equal to $ls_i$ are incompatible and a position element at a specific position in the position chain being equal to $ls_i$ and a value of a certain determined byte of the dynamic drive vector $vector_i$ being equal to 0 are incompatible. Other intermittent states of the computing parameters are not excluded). Since segment-by-segment and bit-by-bit 0⇔1 exchange probabilistically causes absolutely uniform distribution of ’0’ and ’1’ in the source work pool, which will weaken randomness of the regenerated key bit segment sequences, sugaring will damage this absolutely uniform distribution. Because of distribution randomness of metabolic targets and intermittence of triggering conditions, sugaring processing can still guarantee distribution randomness of ’0’ and ’1’ in the source work pool.

2.9.12 Pseudo-random bit rearrangement in pseudo-random bit flipping ∫ must be mutually different from pseudo-random bit rearrangement ∿ , which guarantees mutual independence of a pseudo-random change track of the regenerated key bit segment sequences and a pseudo-random change track of source work pool replacement.

2.9.13 In each round, 0⇔1 exchange must be used for the original metabolic source pseudo-random string only once.

2.9.14 Sugaring needs to be implemented at intervals of several rounds and the number of interval rounds needs to be pseudo-randomly determined. An entire '0' or entire '1' bit string is used as the metabolic source pseudo-random string alternately equiprobably.

Realizing that "non-metabolized construct source bits are pseudo-randomly picked in a staggered manner or metabolized construct source bits are picked in a position-coinciding manner" cannot prove that infinite non-looping of the regenerated key bit segment sequences is realized. In the present invention, two measures are taken to realize infinite non-looping encryption of the regenerated key bit segment sequences: the chaotic computing structure and the staggered segment superposition logic structure. The chaotic computing structure digests repeated sub-bit strings probabilistically and periodically occurring in the reconstructed regenerated key bit segment sequences but this digestion cannot be proved to be thorough. The staggered segment superposition logic structure for the regenerated key bit segment sequences carries out winding between different regenerated key bit segment sequences and transits chaotic winding of pseudo-random string space on regenerated key bit segment sequence space in the encryption process, which completely blocks the change periodicity of the regenerated key bit segment sequences.

3 Expanding of the chaotic computing structure on an effect that "non-metabolized construct source bits are pseudo-randomly picked in a staggered manner or metabolized construct source bits are picked in a position-coinciding manner"

Under a fixed computing structure, output generated from a finite bit set cannot guarantee that periodic repetition does not occur. Similarly, under the fixed computing structure, that "non-metabolized construct source bits are pseudo-randomly picked in a staggered manner or metabolized construct source bits are picked in a position-coinciding manner" also cannot guarantee that repeated regenerated key bit segment sub-sequences do not periodically occur. The chaotic effect of the bit metabolic logic under the chaotic computing structure on metabolism of the source work pool makes a process of obtaining the regenerated key bit segment sequences from the finite set have a chaotic characteristic. The effect is embodied in that:

(1) Pseudo-random change of the bit segment length caused by the chaotic computing structure breaks the regularity of change of metabolized bits in the source work pool.
(2) When the start byte of the construct source circularly advances round by round in the source work pool for bit fetching, pseudo-random change of the bit segment length caused by the chaotic computing structure breaks the regularity of periodic change of bits which are picked repeatedly.

The above breaking of regularity comes from pseudo-randomness of processing with a bit as a unit, and has good randomness and uniform distribution.

4 Staggered segment superposition logic structure

The staggered segment superposition logic structure refers to: a staggered superposition encryption structure for plaintext bit segments with more than one different regenerated key bit segment sequences during plaintext encryption based on the chaotic computing structure. Staggered segment superposition encryption has essential differences with repeated encryption of a plurality of regenerated key bit segment sequences. Staggered segment superposition encryption is specific logic winding encryption realized through two or more regenerated key bit segment sequences by using the chaotic computing structure. Since a single regenerated key bit segment sequence has a chaotic computing structure itself, a chaotic winding effect of the regenerated key bit segment sequences generated by staggered segment superposition of the sequences can achieve power-level expanding of the chaotic effect of the single regenerated key bit segment sequence.

The regenerated key bit segment sequences participating in staggered segment superposition are all based on the same chaotic computing structure and mutual winding of the different regenerated key bit segment sequences in the encryption process is realized by using staggering of the different regenerated key bit segment sequences and same-scale splitting of regenerated key bit segments, plaintext bit segments and ciphertext bit segments. In such a logic structure, pseudo-random bit winding of the transitional pseudo-random strings (see 4.5) in the encryption process can further be embedded, the essence of which is expanding of the transitional pseudo-random string space on the regenerated key bit segment sequence space in a chaotic winding manner.

Fig. 7 shows the simple staggered segment superposition logic structure. Fig. 8 shows a staggered segment superposition logic structure with pseudo-random bit winding embedded.

The simple staggered segment superposition logic structure is introduced in combination with Fig. 7: Fig. 7 shows the simple staggered segment superposition logic structure of two regenerated key bit segment sequences. More-multiplex simple staggered segment superposition logic structures are in a similar way.

4.1 Superposition after staggered segment splitting based on the chaotic computing structure

As shown in Fig. 7, the two regenerated key bit segment sequences ($k1f_i \| k1l_i$, i=0, 1, ...; $k2f_i \| k2l_i$, i=0, 1, ...; wherein '$\|$' is a splicing symbol, the same below) generated based on the chaotic computing structure in the encryption/decryption process are wound in a staggered segment alternating manner. The regenerated key bit segments $bsk1_i$ and $bsk2_i$ are split into two half bit segments respectively, namely $k1f_i$ and $k1l_l$, and $k2f_i$ and $k2l_1$. During computing, a first half bit segment of one regenerated key bit segment sequence and a last half bit segment of the other regenerated key bit segment sequence are superposed for encryption in a staggered manner in sequence ($k1f_i/k2l_{i-1}$, $k1l_i/k2f_i$).

4.2 Staggered segment splitting synchronization

4.2.1 $ls_i$ is determined segment by segment through the chaotic computing structure.

4.2.2 Determining a splitting scale

$\lambda$ ($(1/2)L_{min} \leq \lambda < (1/2)L_{max}$) related to bit segment length limited values $L_{min}$ and $L_{max}$ is used as a segment difference (sd, see Fig. 7) between a first regenerated key bit segment sequence $bsk1_i$ (i=0, 1, 2, ...) and a secondary regenerated key bit segment sequence $bsk2_i$ (i=0, 1, 2, ...). Therefore, the bit segments of the two regenerated key bit segment sequences have a relation: $p2s_i=p1s_i+sd$ ($p1s_i$ and $p2s_i$ are respectively starting positions of $bsk1_i$ and $bsk2_i$). This sd serves as a length $l1f_i$ of the first half bit segment of the first regenerated key bit segment sequence $bsk1_i$ (i=0, 1, 2, ...). A length $l1l_i$ of the last half bit segment of the first regenerated key bit segment sequence $bsk1_i$ (i=0, 1, 2, ...) is computed through $ls_i$ in 4.2.1 and used as a length $l2l_i$: $l1l_i=l2f_i=ls_i-l1f_i$ of the first half bit segment of the secondary regenerated key bit segment sequence $bsk2_i$ (i=0, 1, 2, ...). A length $l2l_i$ of the last half bit segment of the secondary regenerated key bit segment sequence $bsk2_i$ (i=0, 1, 2, ...) is equal to the length $l1f_i$ of the first half bit segment of the first regenerated key bit segment sequence $bsk1_i$ (i=0, 1, 2, ...).

It can be seen from the value formula $(1/2)L_{min} \leq \lambda < (1/2)L_{max}$ of $\lambda$ that: this staggered segment superposition way is still restricted by the chaotic computing structure.

4.3 Winding between different regenerated key bit segment sequences

The simplest winding way is staggered segment alternating XOR on two half bit segments of a plaintext by directly using the half bit segments corresponding to staggered segments of the two regenerated key bit segment sequences, which makes the plaintext always be encrypted in a staggered segment superposition manner by the different regenerated key bit segment sequences. For more complex winding, see the following staggered segment superposition logic structure with pseudo-random bit winding embedded.

4.4 Source work pool metabolism in the staggered segment superposition logic structure

4.4.1 The bit metabolic logic is selected according to the bit fetching logic adopted by the regenerated key bit segment sequences: the raise bit metabolic logic is used with the raise bit logic and the matched bit metabolic logic is used with other bit fetching logics.

4.4.2 The bit metabolic logic adopts a compound form that the matched bit metabolic logic and the raise bit metabolic logic are alternately used (the bit fetching logic also adopts a compound form that the non raise bit logic and the raise bit logic are alternately used).

4.4.3 When a multiplex staggered segment superposition logic structure is adopted, the differentiated bit fetching logics and bit metabolic logics and the differentiated drive sources and construct sources can be used to obtain differentiated metabolic sources and differentiated metabolic target areas. The metabolic multiplicity of the position chain can be lowered properly according to the requirements of encryption efficiency.

The multiplex staggered segment superposition logic structure with pseudo-random bit winding embedded for many times is introduced in combination with Fig. 8.

Fig. 8 shows two sets of staggered segment superposition logic structures each containing two regenerated key bit segment sequences with pseudo-random bit winding embedded three times. More-multiplex staggered segment superposition logic structures with pseudo-random bit winding embedded for more times are in a similar way. Staggered segment superposition logic structures with pseudo-random bit winding backwards moved by a half key bit segment (namely pseudo-random bit winding is embedded into the secondary regenerated key bit segment sequence, see Fig. 9) are in a similar way.

Processing such as regenerated key bit segment construction, source work pool metabolism and stack dispatching in a staggered segment superposition process is omitted in Fig. 8. Fig. 8 focuses on integration of bit segment splitting, synchronization processing and pseudo-random bit winding embedding. Please see Fig. 8' for a complete computing process of multiplex staggered segment superposition with pseudo-random bit winding embedded for many times (to clearly show an operation order, in intermediate computing steps of Fig. 8', old computing elements are replaced with new computing elements only, and the new computing elements, the process of obtaining the new computing element and results are represented by one computing element).

Two sets of multiplex staggered segment superposition logic structures each containing a plurality of regenerated key bit segment sequences with pseudo-random bit winding embedded for many times are introduced below with reference to Fig. 8.

4.5 Realizing pseudo-random bit winding of a transitional pseudo-random string by using an existing position chain

The transitional pseudo-random string refers to a pseudo-random string generated by a former regenerated key bit segment sequence or obtained by pseudo-random bit winding between multiplex encryption in the same round and used for latter pseudo-random bit winding or regenerated key bit segment sequence computing.

Pseudo-random bit winding refers to pseudo-random reordering of all bits in one transitional pseudo-random string. This processing causes further bit winding between transitional pseudo-random strings in different rounds under the staggered segment superposition logic structure. What is different from pseudo-random bit rearrangement  of the bit fetching logic and pseudo-random bit rearrangement in pseudo-random bit flipping  of the bit metabolic logic is that: (1) an object of pseudo-random bit winding is the transitional pseudo-random string; and (2) a reversible operation needs to be easy in winding. The purpose of (1) is to realize re-winding in a direction perpendicular to a direction of winding between different regenerated key bit segment sequences. The purpose of (2) is to guarantee available decryption without increasing decryption computing quantity. In the description, position elements which are sequentially paired in position chains pos_chain($ls_i$-$L_{min}$) with the equal bit segment length are used to perform bit value permutation on bits in a specified transitional pseudo-random string.

4.5.1 Based on the chaotic computing structure, the plaintext bit segments, the regenerated key bit segments and the ciphertext bit segments are divided with the same scale. The bit segment splitting scale is determined according to sd in 4.2.2: sd, $ls_i$-sd.

4.5.2 Two sets of first regenerated key bit segment sequences and secondary regenerated key bit segment sequences belonging to different splitting are constructed: the regenerated key bit segment sequences in the sets and between the sets are different from each other.

4.5.2.1 Two sets of regenerated key bit segment sequences are established; $bsk1_{i,q}$, $bsk2_{i,q}$, q=0, 1, ..., s, and i=0, 1, ... (q is a subscript of each regenerated key bit segment sequence belonging to different sets (1 or 2), s is the number of the regenerated key bit segment sequences in each set, and i is a round number)

4.5.2.2 The regenerated key bit segments in each set of regenerated key bit segment sequences are split in accordance with the scale in 4.5.1 respectively: $k1f_{i,q}$ (a length is sd), $k1l_{i,q}$ (a length is $ls_i$-sd), $k2f_{i,q}$ (a length is $ls_i$-sd) and $k2l_{i,q}$ (a length is sd); and the plaintext bit segments are also split by the same scale: $Mf_i$ (a length is sd) and $Ml_i$ (a length is $ls_i$-sd).

4.5.2.3 The differentiated bit fetching logics and bit metabolic logics, or the differentiated construct sources and drive sources are determined for each regenerated key bit segment sequence to ensure mutual difference of the regenerated key bit segments.

4.5.3 Staggered segment superposition encryption of different regenerated key bit segment sequences based on same-scale splitting and having pseudo-random bit winding embedded

4.5.3.1 s cache areas with a length of sd are used to store all last half key bit segments $k2l_{i,q}$, q=0, 1, 2, ..., s, in the secondary regenerated key bit segment sequence set, to be used for hysteretic staggered segment encryption.

4.5.3.2 Except the first round ($k2l_{0,-1}$ does not exist in the first round, so only half segment encryption of $k2f_{0,0}$ is implemented during staggered segment encryption of the secondary regenerated key bit segment sequence set), staggered segment encryption in other rounds is performed according to the following sequence (for used identifications, see notes behind 4.5.4.5):

⊕$k1f_{i,q}$||$k1l_{i,q}$, q=0;
⊝i,r, r=r+1; ⓢ;
⊕$k2l_{i-1,q}$||$k2f_{i,q}$; q=q+1;
⊝i,r; r=r+1; ⓢ;
⊕$k1f_{i,s}$||$k1l_{i;s}$;
⊝i,2s-1; ⓢ;
⊕$k2l_{i-1,s}$||$k2f_{i,s}$;

4.5.4 Staggered segment decryption of different regenerated key bit segment sequences based on same-scale splitting and having pseudo-random bit winding embedded

During decryption, required computing quantity is reconstructed or picked according to an encryption order to complete corresponding metabolism and then the obtained computing quantity is reversely used to carry out decryption computing.

4.5.4.1 The following is established when the chaotic computing structure is initialized: (1) a position chain stack stack_chain with a length of $L_{max}$, configured to store a position chain; (2) a half-stack stack_k2f with a length of $L_{max}$-sd, configured to store first half bit segments of s secondary regenerated key bit segments; (3) a half-stack stack_k2l with a length of sd, configured to store last half bit segments of s secondary regenerated key bit segments for staggered segment splicing of the next round; (4) a staggered segment half-stack s_stack_k2l with a length of sd, configured to copy half key bit segments $k2l_{i-1,q}$ stored in the half-stack stack_k2l in the previous round so as to splice a staggered segment secondary regenerated key bit segment $k2l_{i-1,q}$||$k2f_{i,q}$; and (5) a whole stack stack_bsk1 with a length of $L_{max}$, configured to store a first regenerated key bit segment used in the current round;

4.5.4.2 Except the first round, at the beginning of decryption in each round, the last half bit segments of all the secondary regenerated key bit segments which are pushed into stack_k2l in the previous round are copied into s_stack_k2l and stack_k2l is emptied.

4.5.4.3 Except the first round, s times of computing quantity reconstruction or picking are implemented in each round according to an encryption processing sequence: (1) a regenerated key bit segment $bsk1_{i,q}$ is reconstructed and pushed into the whole stack stack_bsk1 and the position chain pos_chain($ls_i$-$L_{min}$) is metabolized; (2) the position chain pos_chain($ls_i$-$L_{min}$) is pushed into the position chain stack stack_chain and is metabolized; (3) a regenerated key bit segment $bsk2_{i,q}$, q=0, 1, ..., s-1, is reconstructed and pushed into the half-stacks stack_k2f and stack_k2l and the position chain pos_chain($ls_i$-$L_{min}$) is metabolized; and (4) except the $s^{th}$ time, the position chain pos_chain($ls_i$-$L_{min}$) is pushed into the position chain stack stack_chain and is metabolized.

4.5.4.4 Except the first round, staggered segment decryption is performed in other rounds in a reverse sequence of the encryption sequence (for used identifications, see notes behind 4.5.4.5):

⊕$k2l_{i-1,q}$||$k2f_{i,q}$, q=s;
⊝i,r, r=2s-2; r=r-1;
⊕$k1f_{i,q}$||$k1l_{i,q}$, q=s; q=q-1;
⊝i,r, r=r-1;
⊕$k21_{i-1,0}$||$k2f_{i,0}$;
⊝i,0;
⊕$k1f_{i,0}$||$k1l_{i,0}$;

4.5.4.5 A length of a half bit segment in each round and each time of decryption is sd or $ls_i$-sd and excess parts of $L_{max_}ls_i$ are omitted.

Notes: in the above formulas of (4.5.3.2) and (4.5.4.4): '⊕' represents that staggered or non-staggered regenerated key bit segments specified behind are used to perform XOR on a transitional pseudo-random string generated by computing in the previous step; '⊝' represents that (1) a position chain pos_chain(r), r=0, 1, ..., 2s-2, used in encryption specified behind is used to implement bit winding, or (2) a position chain pos_chain(r), r=2s-2, 2s-3, ..., 1, 0, released from a position chain stack stack_chain used during decryption specified behind is used to relieve bit winding (herein, r specifies a position chain of the $r^{th}$ metabolism in the $(2s-1)^{th}$ metabolism used for pseudo-random bit winding in the $(ls_i-L_{min})^{th}$ position chain pos_chain($ls_i$-$L_{min}$) in a position chain set); 'ⓢ' represents that the position chain pos_chain($ls_i$-$L_{min}$) is metabolized after pseudo-random bit winding (during decryption, since the position chain

pos_chain($ls_i$-$L_{min}$) has been metabolized in 4.5.4.3, the position chain pos_chain($ls_i$-$L_{min}$) does not need to be metabolized again in 4.5.4.4); and ";" represents ending of one computing step.

4.6 Staggered segment winding with pseudo-random bit winding embedded

Pseudo-random bit winding shown by Fig. 8 is implemented on all first regenerated key bit segments. Due to a staggered segment effect, this pseudo-random bit winding acts on a transitional pseudo-random string after encryption of the first regenerated key bit segments and a transitional pseudo-random string after encryption of a regenerated key bit segment which is formed by recombining a last half bit segment in the previous round of the secondary regenerated key bit segment and a first half bit segment of the current round in a staggered segment manner, which realizes further staggered segment winding between front and back bit segments on the basis of staggered segment winding between two sets of mutually different regenerated key bit segment sequences.

4.7 Source work pool metabolism in the staggered segment superposition logic structure with pseudo-random bit winding embedded

4.7.1 The bit metabolic logic is selected according to the bit fetching logic adopted by the regenerated key bit segment sequences: the matched bit metabolic logic is used with the bit jump logic; the raise bit metabolic logic is used with the raise bit logic; and the matched bit metabolic logic is used with other bit fetching logics.

4.7.2 In a staggered segment superposition model, the bit metabolic logic better adopts a hybrid form that the matched bit metabolic logic and the raise bit metabolic logic are alternately used (the bit fetching logic also adopts a compound form that the non raise bit logic and the raise bit logic are alternately used).

5 A number of problems related to reconstruction logic structure

5.1 Correlation of chaotic computing structure customizing configuration logics

Chaotic computing structure customizing only runs once, of which expenditure can be neglected.

Different chaotic computing structures are obtained by different customizing configurations of the compound logic structure. In the present invention, customizing is realized through structure configuration quantity and relevant configuration logics. This section focuses on clarifying the joining relations between these configuration logic units:

5.1.1 A key length is determined through the structure configuration quantity and then the density of a security system and the resource consumption magnitude are determined. A plurality of pieces of structure configuration quantity having the ruler significance are listed here to make the density and the resource consumption magnitude clear: 512, 640, 768, 896 ...

5.1.2 A key size, a source pool size and an initial source work pool size are determined through the structure configuration quantity according to configuration logics and an initial source work pool is loaded through a key according to the initial source work pool size.

5.1.3 A position where the dynamic drive vector $vector_0$ is obtained is pseudo-randomly determined in the source work pool according to the key and the initial dynamic drive vector $vector_0$ is picked.

5.1.4 The max length of bit segment $L_{max}$ and the min length of bit segment $L_{min}$ are computed through the initial dynamic drive vector $vector_0$.

5.1.5 The pseudo plaintext pM is generated according to a difference between the source pool size and the initial source work pool size.

5.1.6 The end-of-plaintext EOP is generated according to the initial dynamic drive vector $vector_0$.

5.1.7 The position chain set pos_chain is generated according to the max length of bit segment $L_{max}$ and the min length of bit segment $L_{min}$ and is initialized.

5.2 There are many methods of initializing the position chain set pos_chain and in the description, a method of leading randomness of the position chain by randomness of the key is used.

5.2.1 An initial value of the position chain set pos_chain(j), j=0, 1, 2, ..., $L_{max}$-$L_{min}$ is set to be {0, 1, 2, ..., $L_{min}$+j-1}, j=0, 1, 2, ..., $L_{mx}$-$L_{min}$.

5.2.2 Initializing control quantity $pos_init_0$ of the position chain is set to be a value of the first byte of the initial dynamic drive vector $vector_0$.

5.2.3 The position chain pos_chain(j) is circularly initialized j by j (j=0, 1, 2, ..., $L_{max}$-$L_{min}$).

5.2.3.1 The position chain pos_chain(j) is metabolized for ($pos_init_j$%initLmt)+3 times (initLmt is a number denoted by first three bits of $vector_0$) through the method described in 2.7 of integration of the bit fetching logic and the bit metabolic logic.

5.2.3.2 Drive quantity $pos_init_{j+1}$ is initialized for each j+1 reset position chain

$$pos_init_{j+1} = pos_init_j \oplus pos_chain[j-1,0]$$

wherein ⊕ is an XOR operation.

5.2.3.3

$$j=j+1.$$

5.3 Since the pseudo-random bit fetching logic is very high in uniform distribution, '0' or 'F' bytes will occur in the regenerated key bit segments with high probability (about 1/256), which leads to that plaintext bytes or reverse bytes thereof (XOR of the plaintext bytes and 'F') will be directly output with high probability in a ciphertext only encrypted by the single reconstruction logic structure. For the staggered segment superposition logic structure with pseudo-random bit winding embedded, the above problems do not exist.

Embodiments

In this description, a non-superposition & single metabolic model with a go one by one logic/raise bit metabolic logic matched is selected as embodiment 1 and a double-superposition & double-metabolic staggered segment superposition model with a go chain logic/raise bit metabolic logic and a bit jump logic/matched bit metabolic logic matched and with pseudo-random bit winding embedded is selected as embodiment 2. The purposes are that: (1) embodiment 1 is used to describe a basic form of a compound logic structure and a correlation form of a chaotic computing structure with a bit fetching logic and a bit metabolic logic; and (2) embodiment 2 is used to describe a more complex correlation form of the compound logic structure: a cooperative effect of the chaotic computing structure on a staggered segment superposition logic structure, and a chaotic form with pseudo-random bit winding embedded. Since a computing structure of more-multiplex staggered segment superposition is in a similar way, a duplex superposition model with pseudo-random bit winding embedded is selected only once in embodiment 2.

Embodiment 1 Non-superposition & single metabolic model with configuration of go one by one logic/raise bit metabolic logic

Computing parameters and computing formulas of embodiment 1 (all the computing formulas are based on a real number type)

Configuration of chaotic computing structure

1 As a secret agreement of both encryption/decryption parties, structure configuration quantity $ctl_{init}$ of embodiment 1 is defined to be 640 and a key length is made to be equal to 640.

2 A source pool and a source work pool of embodiment 1 are defined and a pseudo plaintext is defined and generated

2.1 Defining source pool SPool

The source pool SPool meets:

$$length(SPool) = 2*ctl_{init} \qquad (1)$$

2.2 Defining source work pool $SPool_{work}$ and loading source work pool $SPool_{work}$

An initial source work pool $SPool_{work}$ is defined to meet: $length(SPool_{work}) = ctl_{init}$

An initial content of the source work pool $SPool_{work}$ is set as a key.

3 As a secret agreement of both the encryption/decryption parties, a dynamic drive vector $vector_i$ of embodiment 1 is defined as a sub-string in the source pool Spool:

$$vector_0 = \prod_{h=0}^{l-1} Spool_{work}((vectstart_0+h)\%length(Spool_{work})) \quad (2)$$

wherein $vectstart_0$ is a byte position determined by first three bytes of the key

$$vectstart_0=((Spool_{work}[0]+Spool_{work}[1] +Spool_{work}[2])\%640)/8,$$

l is a positive integer and meets 64=l,

$length(Spool_{work})$ is a length of the source work pool, of which an initial value is the key length,

$\prod_{h=0}^{l-1} Spool_{work}((vectstart_0+h)\%length(Spool_{work}))$ is a bit string with a length of l specified pseudo-randomly by $vectstart_0$ in the key (h continues from the beginning after reaching a tail end of the source work pool).

$$vector_i=\prod_{h=0}^{l-1} Spool_{work}((vectstart_{i-1}+8+h)\%Length(Spool_{work})) \quad (2')$$

$vectstart_i$ is the first bit of the first byte of a dynamic drive vector in the $i^{th}$ round in the source work pool (continuing from the beginning after reaching the tail end of the source work pool),

$vector_i$ is the dynamic drive vector of the $i^{th}$ round,

the dynamic drive vector as shown in (2') is backwards moved by one byte round by round (continuing from the beginning after reaching the tail end of the source work pool),

it can be known from l=64 that a length of $vector_i$ is 8 bytes.

4 Computing the max length of bit segment $L_{max}$ and the min length of bit segment $L_{min}$ of embodiment 1

4.1 Computing the max length of bit segment $L_{max}$

$$L_{max}=ctl_{init}/12+((vector_0[0]+ vector_0[1])\%(ctl_{init}/128))+ctl_{init}/128 \quad (3)$$

wherein $vector_0[0]$ and $vector_0[1]$ are first two bytes of the initial dynamic drive vector $vector_0$.

4.2 Computing the min length of bit segment $L_{min}$

$$L_{min}= ctl_{init}/12 - ((vector_0[2] +vector_0[3])\%(ctl_{init}/128)) - ctl_{init}/128 \quad (4)$$

wherein $vector_0[2]$ and $vector_0[3]$ are the third and fourth bytes of the initial dynamic drive vector $vector_0$.

5 Defining the pseudo plaintext pM and the end-of-plaintext EOP of embodiment 1

5.1 The pseudo plaintext pM generated according to 2 is a pseudo-random string with a length meeting $length(pM) = ctl_{init}$.

5.2 It is defined that the end-of-plaintext EOP is a bit string with a length meeting $length(EOP) = length(vector_0)$ and generated by XOR of a sub-string $\prod_{h=0}^{l-1} Spool_{work}((vectstart_0+l+h)\%length(Spool_{work}))$ in the initial source work pool and the initial dynamic drive vector $vector_0$:

$$EOP=vector_0 \oplus \prod_{h=0}^{l-1} Spool_{work}((vectstart_0+l+h)\%length(Spool_{work})) \quad (5)$$

wherein l=length($vector_0$),

See 3 for $vectstart_0$.

6 Defining and initializing the position chain set

6.1 Defining a position chain set pos_chain(j,k), j=0, 1, 2, ..., $L_{max}$-$L_{min}$, k=0, 1, ..., $L_{min}$+j-1 (6)

6.2 Initialization of the position chain set pos_chain follows 5.2 of **illustration of a sequence encryption method for reconstructing a key.**

Encryption/decryption computing formulas and computing units of embodiment 1

7 Defining a rebuild plaintext M to be splicing of the pseudo plaintext pM, a plaintext, the end-of-plaintext EOP and a supplementing pseudo-random string $ms_{additn}$

$$M=pM||plaintext||EOP||ms_{additn} \quad (7)$$

wherein a length of the supplementing pseudo-random string $ms_{additn}$ is $L_{max}$.

8 Pseudo-randomly constructing $ls_i$ of encryption in each round of embodiment 1

8.1 Setting a bit segment length in the first round

$$ls_0 = (vector_0[2])\%(L_{max}-L_{min})+L_{min} \quad (8)$$

wherein $vector_0$[2] is the third byte of the initial dynamic drive vector $vector_0$.

8.2 Defining a bit segment fixed-length function in each round

$$ls_i=(vector_i[vector_i[2]\%8])\%(L_{max}-L_{min})+L_{min} \quad (8')$$

9 Pseudo-randomly constructing a regenerated key bit segment $\underline{bsk_i}$ of embodiment 1

9.1 Defining a construction byte $pickbyte_{i,j}$ in a construct source $SPool_{work}$ (byte is used as the unit in a computing formula):

$$pickbyte_{i,0}=(pickbyte_{i-1,0}+1)\%workbyte \quad (9)$$

$$pickbyte_{0,0}= vector_0\%workbyte \quad (9')$$

wherein $vector_0$ is the initial drive vector,

workbyte is a source work pool length computed with byte (the same below),

$pickbyte_{i-1,0}$ is the first construction byte in the previous round,

$pickbyte_{0,0}$ in (9') is the first construction byte in the first round, $pickbyte_{i,j}$ in (9) is the first construction byte in the $i^{th}$ round later, and

$pickbyte_{i,0}$ advances by one byte in the source work pool $SPool_{work}$ round by round (continuing from the beginning after reaching the tail end of the source work pool).

$$pickbyte_{i,j}=(pickbyte_{i,j-1}+1)\%workbyte \quad (9'')$$

wherein $pickbyte_{i,j}$ is the $j^{th}$ construction byte in the $i^{th}$ round and advances in the source work pool $SPool_{work}$ byte by byte (continuing from the beginning after reaching the tail end of the source work pool).

9.2 Defining a construction drive value $pickdriveval_{i,j}$

9.2.1 Defining a first drive element $Pickdrivelmt_{i,0}$ in a drive source (bit is used as the unit in a computing formula)

$$pickdrivelmt_{0,0}=((pickbyte_{0,0}+workbyte)*8-vector_0[0])\%length(Spool_{work}) \quad (10)$$

$$pickdrivelmt_{i,0}= (pickdrivelmt_{i-1,0}+1)\%workbyte \quad (10')$$

wherein: $pickdrivelmt_{0,0}$ is a position in the source work pool and has a relative segment difference determined pseudo-randomly by the key with $pickbyte_{0,0}$.

9.2.2 A drive element sequence in the drive source

$$pickdrivelmt_{i,j}=(pickdrivelmt_{i,j-1}+4)\%\ length(Spool_{work}),\ j=0,\ \ldots,\ ls_i-1 \quad (10'')$$

$pickdrivelmt_{i,j}$ advances with 4 bits in the source work pool $Spool_{work}$ drive-element by drive-element (continuing from the beginning after reaching the tail end of the source work pool) to obtain the drive element sequence $pickdrivelmt_{i,j}$, j=0, 1, ..., $ls_i$-1.

9.2.3 Picking a drive value $pickdriveval_{i,j}$ from a drive element

If a value of the last bit of the drive element $pickdrivelmt_{i,j}$ is '0', values of first 3 bits of the drive element are picked as drive values $pickdriveval_{i,j}$, otherwise values of last 3 bits of the drive element are picked as the drive values $pickdriveval_{i,j}$, so as to obtain a drive value sequence $pickdriveval_{i,j}$, j=0, 1, ..., $ls_i$-1.

9.3 Constructing a regenerated key bit segment $\underline{bsk_i}$

9.3.1 The first drive value $pickdriveval_{i,j}$ is picked; the first construction byte $Pickbyte_{i,0}$ of the construct source is positioned; and an output pseudo-random string tmp_str(j), j=0, 1, ..., $ls_i$-1 is emptied.

9.3.2 A value is picked from the current construction byte $pickbyte_{i,j}$ according to a bit specified by the current drive value $pickdriveval_{i,j}$ so as to update an element tmp_str(j) in the output pseudo-random string.

9.3.3 The next drive value $pickdriveval_{i,j+i}$ and the next construction byte $pickbyte_{i,j+i}$ are positioned.

9.3.4 The above 9.3.2 and 9.3.3 are repeated by stepping j=j+1 until a length of the output pseudo-random string reaches $ls_i$.

9.3.5 An output pseudo-random string tmp_str(j), j=0, 1, ..., $ls_i$-1 not subjected to pseudo-random bit rearrangement is used as the regenerated key bit segment $\underline{bsk_i}$.

10 Raise bit metabolic logic

10.1 Defining a metabolic target area $metabolizebyte_{i,j}$, j=0, 1, 2, ..., $ls_i$-1 (byte is used as the unit in a computing formula):

$$metabolizebyte_{i,0}=pickdrivelmt_{i,0} \quad (11)$$

$$metabolizebyte_{i,j}=(metabolizebyte_{i,j-1}+1)\%workbyte,\ j=0,\ 1,\ \ldots,\ ls_i-1 \quad (11')$$

wherein workbyte is the length of the source work pool, with byte as the unit.

$metabolizebyte_{i,j}$ advances in the source work pool $SPool_{work}$ byte by byte (continuing from the beginning after reaching the tail end of the source work pool).

10.2 Obtaining a metabolic source pseudo-random string metabol_str(j) (j=0, 1, 2, ..., $ls_i$-1)

10.2.1 The metabolic source pseudo-random string metabol_str(j) (j=0, 1, 2, ..., $ls_i$-1) having the same length as the regenerated key bit segment $bsk_i$ is defined.

10.2.2 If pos_chain($ls_i$-$L_{min}$,0) in the position chain pos_chain($ls_i$-$L_{min}$) having the same length as the regenerated key bit segment is equal to 0, the metabolic source pseudo-random string metabol_str(j) (j=0, 1, 2, ..., $ls_i$-1) is equal to 0; and if pos_chain($ls_i$-$L_{min}$,0) in the position chain pos_chain($ls_i$-$L_{min}$) having the same length as the regenerated key bit segment is equal to $ls_i$, the metabolic source pseudo-random string metabol_str(j) (j=0, 1, 2, ..., $ls_i$-1) is equal to 1.

Otherwise

10.2.3 After 0⇔1 exchange is performed on an original metabolic source pseudo-random string (namely the output pseudo-random string tmp_str(j), j=0, 1, ..., $ls_i$-1 in 9.3.6) one by one through values of bits specified by the position elements in the position chain, a metabolic source pseudo-random string metabol_str(j)= tmp_str [pos_chain($ls_i$-$L_{min}$,j)], (j=0, 1, 2, ..., $ls_i$-1) is spliced.

10.3 Performing raise bit metabolizing on a metabolic target area in the source work pool with the metabolic source pseudo-random string metabol_str obtained in 10.2

10.3.1

$$\text{Metabolic bits are defined: } metabolbit_i(0)=0 \qquad (12)$$

$$metabolbit_i(j)=(metabolbit_i(j-1)+1)\%8 \qquad (12')$$

10.3.2 Metabolizing metabolic bits in all bytes of the metabolic target area:

$$metabolizebyte_{i,j}(metabolbit_i(j))=metabol_str(j),\ j=0,\ 1,\ 2,\ \ldots,\ ls_i-1 \qquad (13)$$

11 Metabolism of the position chain pos_chain($ls_i$-$L_{min}$)
pos_chain($ls_i$-$L_{min}$) is metabolized through the way in 2.7 of **illustration of a sequence encryption method for reconstructing a key.**

Encryption/decryption process control of embodiment 1

Encryption

1 The structure configuration quantity $ctl_{init}$ is made to be equal to 640.
2 The source pool Spool, the source work pool $SPool_{work}$, the max length of bit segment $L_{max}$, the min length of bit segment $L_{min}$, length computing and generating of the pseudo plaintext pM and the end-of-plaintext EOP are constructed one by one according to the above **configuration of chaotic computing structure** and the position chain set pos_chain is constructed.
3 According to 7 **of encryption/decryption computing formulas and computing units of embodiment 1,** the rebuild plaintext M is spliced and the bit segment length $ls_0$ is computed; and according to **8 of encryption/decryption computing formulas and computing units of embodiment 1,** the initial dynamic drive vector $vector_0$ is picked.
4 According to **9.2 of encryption/decryption computing formulas and computing units of embodiment 1,** the first drive element $pickdrivelmt_{i,0}$ is positioned in the drive source and the first drive value $pickdriveval_{i,0}$ is picked; and the first construction byte $Pickbyte_{i,0}$ of the construct source is positioned and the output pseudo-random string tmp_str(j), j=0, 1, ..., $ls_i$-1 is emptied.
5 According to **9.3 of encryption/decryption computing formulas and computing units of embodiment 1,** the output pseudo-random string tmp_str(j), j=0, 1, ..., $ls_i$-1 is circularly picked to construct the regenerated key bit segment $bsk_i$.

6 Plaintext bit segments $M_i$ with a length of $ls_i$ are picked sequentially from the plaintext M and the regenerated key bit segment $\overline{bsk_i}$ is used to perform XOR encryption on the plaintext bit segments $M_i$.
7 If the source work pool has not reached a mature period, growth period metabolism is implemented on the source work pool through the plaintext bit segments $M_i$ (namely the pseudo plaintext $pM_i$) (see 1.5.5.1 of the **single reconstruction logic structure**); otherwise, the source work pool is metabolized through the raise bit metabolic logic according to **10 of encryption/decryption computing formulas and computing units of embodiment 1.**
8 According to 2.7 of **illustration of a sequence encryption method for reconstructing a key,** the position chain pos_chain($ls_i$-$L_{min}$) is metabolized and $vector_i$ moves backwards by one byte in the source work pool.
9 $ls_i$ is computed by stepping i=i+1. If the length of the plaintext bit segment $M_i$ is smaller than $ls_i$, following encryption postprocessing is executed, otherwise circularly executing the above 4 to 8.
10 Remaining bit strings behind a plaintext computing ending position are spliced to a ciphertext.

Decryption

1 The same as 1 of **encryption.**
2 The source pool Spool, the source work pool $SPool_{work}$, the max length of bit segment $L_{max}$, the min length of bit segment $L_{min}$, length computing of the pseudo plaintext pM and the end-of-plaintext EOP are constructed one by one according to the above **configuration of chaotic computing structure** and the position chain set pos _chain is constructed.
3 The bit segment length $ls_0$ is computed and according to **8 of encryption/decryption computing formulas and computing units of embodiment 1,** the initial dynamic drive vector $vector_0$ is picked.
4 According to **9.2 of encryption/decryption computing formulas and computing units of embodiment 1,** the first drive element $pickdrivelmt_{i,0}$ is positioned in the drive source and the first drive value $pickdriveval_{i,0}$ is picked; and the first construction byte $Pickbyte_{i,0}$ of the construct source is positioned and the output pseudo-random string tmp_str(j), j=0, 1, ..., $ls_i$-1 is emptied.
5 According to **9.3 of encryption/decryption computing formulas and computing units of embodiment 1,** the output pseudo-random string tmp_str(j), j=0, 1, ..., $ls_i$-1 is circularly picked to construct the regenerated key bit segment $bsk_i$.
6 Ciphertext bit segments $C_i$ with a length of $ls_i$ are picked sequentially from a ciphertext C and the regenerated key bit segment $\overline{bsk_i}$ is used to perform XOR decryption on the ciphertext bit segments $C_i$.
7 If the source work pool has not reached the mature period, growth period metabolism is implemented on the source work pool through the plaintext bit segments $M_i$ (namely the pseudo plaintext $pM_i$) obtained by decryption (see 1.5.5.1 of the **single reconstruction logic structure)**; otherwise, the source work pool is metabolized through the raise bit metabolic logic according to **10 of encryption/decryption computing formulas and computing units of embodiment 1.**
8 According to 2.7 of **illustration of a sequence encryption method for reconstructing a key,** the position chain pos_chain($ls_i$-$L_{min}$) is metabolized and $vector_i$ moves backwards by one byte in the source work pool.
9 $ls_i$ is computed by stepping i=i+1. If the length of the ciphertext bit segment $C_i$ is smaller than $ls_i$, following decryption postprocessing is executed, otherwise circularly executing the above 4 to 8.

9.1 The pseudo plaintext pM in the plaintext obtained by decryption is removed.
9.2 Ends-of-plaintexts EOP are compared at the position of reverse $L_{max}$+length($vector_0$) at the tail of the plaintext obtained by decryption, and if found, the ends-of-plaintexts EOP and a subsequent supplementing pseudo-random string $ms_{additn}$ are removed; and if the ends-of-plaintexts EOP are not found, it is shown that errors occur in processes of encryption, transmission and decryption.

Embodiment 2 Double-superposition & double-metabolic staggered segment superposition model with a go chain logic/raise bit metabolic logic and a bit jump logic/matched bit metabolic logic matched and with pseudo-random bit winding embedded

Since only one regenerated key bit segment sequence (s=1, see 4.5 of the **staggered segment superposition logic structure**) is used in regenerated key bit segment sequence sets of the present embodiment, in the present embodiment, regenerated key bit segment sequence set identifications (1 and 2 in $bsk1_{i,q}$ and $bsk2_{1,q}$, see 4.5 of the **staggered segment superposition logic structure**) and regenerated key bit segment sequence sub-identifications (q in $bsk1_{i,q}$ and $bsk2_{i,q}$, see 4.5 of the **staggered segment superposition logic structure**) in the sets are combined into '1' and '2', and stacks are replaced with single cache areas.

Computing parameters and computing formulas of embodiment 2
Configuration of chaotic computing structure
The same as 1-6 of **configuration of chaotic computing structure of embodiment 1**
Encryption/decryption computing formulas and computing units of embodiment 2
7 The same as 7 of **encryption/decryption computing formulas and computing units of embodiment 1**
8 The same as 8 of **encryption/decryption computing formulas and computing units of embodiment 1**
9 Pseudo-randomly constructing a regenerated key bit segment $\underline{bsk1}$ of a first regenerated key bit segment sequence:

9.1 Defining a construction byte pickbyte$1_{i,j}$ in a construct source pickarea$1_i$ of the first regenerated key bit segment sequence (byte is used as the unit in a computing formula)
9.1.1 Defining the construct source pickarea$1_i$ of the first regenerated key bit segment sequence
9.1.1.1 Defining a start byte position of the construct source of the first regenerated key bit segment sequence in the source work pool $SPool_{work}$:

$$pickarea1start_0=vector_0\%workbyte \quad (14)$$

$$pickarea1start_i=(pickarea1start_{i-1}+1)\%workbyte \quad (14')$$

(14) is a start byte position of a construct source in the first round in the source work pool $SPool_{work}$ and (14') is start byte positions of construct sources in other rounds in the source work pool $SPool_{work}$.
9.1.1.2 Defining the construct source pickarea$1_i$ of the first regenerated key bit segment sequence:

$$pickarea1_i=\prod_{h=0}^{lsi-1}Spool((pickarea1start_i+h)\%workbyte) \quad (15)$$

(15) is a construct source constituted by $ls_i$ bytes beginning from pickarea1start$_i$ (h carries with byte and continues from the beginning after reaching a tail end of the source work pool).
9.1.2 Defining a construction byte sequence pickbyte$1_{i,j}$, j=0, 1, ..., $ls_i$-1 of the first regenerated key bit segment sequence:

$$pickbyte1_{i,j}=pickarea1_i(pos_chain(ls_i-L_{min},j))\%workbyte,\ j=0,\ 1,\ \ldots,\ ls_i-1 \quad (16)$$

wherein pos_chain($ls_i$-$L_{min}$,j) is the $j^{th}$ position element in a position chain pos_chain($ls_i$-$L_{min}$) having the same length as the bit segment length.
9.2 The same as 9.2 of **encryption/decryption computing formulas and computing units of embodiment 1.**
9.3 Constructing a regenerated key bit segment bsk$1_i$ of the first regenerated key bit segment sequence
9.3.1 A first drive value pickdriveval$1_{i,0}$ is picked from a first drive element pickdrivelmt$1_{i,0}$ of the first regenerated key bit segment sequence according to the method in 9.2.3 of **encryption/decryption computing formulas and computing units of embodiment 1** and an output pseudo-random string tmp_str(j), j=0, 1, ..., $ls_i$-1 is emptied.
9.3.2 A value is picked from the current construction byte pickarea$1_i$(j) according to a bit specified by the current drive value pickdriveval$1_{i,0}$ so as to update an element tmp_str(j) in the output pseudo-random string.
9.3.3 The current drive element pickdrivelmt$1_{i,j}$ is moved backwards by 4 bits to be used as the next drive element pickdrivelmt$1_{i,j+1}$ and is positioned to the next construction byte according to (16).
9.3.4 The next drive value pickdriveval$1_{i,0}$ is picked according to the method in 9.2.3 of **encryption/decryption computing formulas and computing units of embodiment 1.**
9.3.5 The above 9.3.2, 9.3.3 and 9.3.4 are repeated by stepping j=j+1 until j=$ls_i$-1, so as to obtain the output pseudo-random string tmp_str(j), j=0, 1, ..., $ls_i$-1.
9.3.6 Pseudo-random bit rearrangement is performed according to the output pseudo-random string tmp_str(j), j=0, 1, ..., $ls_i$-1, and a result is used as the regenerated key bit segment $\underline{bsk1_i}$ of the first regenerated key bit segment sequence.

10 The same as 10 of **encryption/decryption computing formulas and computing units of embodiment 1** (a metabolic target is a metabolic target area of the first regenerated key bit segment sequence).

11 The same as 11 of **encryption/decryption computing formulas and computing units of embodiment 1.**

12 Pseudo-randomly constructing a regenerated key bit segment $\underline{bsk2_i}$ of a secondary regenerated key bit segment sequence of embodiment 2

12.1 Determining a construct source $pickarea2_i$ and a drive source $pickdrivearea2_i$ of the secondary regenerated key bit segment sequence of embodiment 2

12.1.1 Pseudo-randomly determining a construct source start position of the secondary regenerated key bit segment sequence through a dynamic drive vector $vector_i$:

$$pickstart2_{i,0}=vector_i[2]\%length(Spool_{work})$$

12.1.2 The construct source $pickarea2_i$ is formed by splicing a bit string from the construct source start position $pickstart2_{i,0}$ to the tail of the source pool and two bit strings from the head of the source pool to the construct source start position $pickstart2_{i,0}$.

12.1.3 Pseudo-randomly determining a drive source start position of the secondary regenerated key bit segment sequence through the dynamic drive vector $vector_i$:

$$pickdrivstart2_{i,0}= (pickstart2_{i,0}+length(Spool_{work})-vector_i[4]-1)\%length(Spool_{work})$$

12.1.4 The drive source $pickdrivearea2_i$ is formed by splicing a bit string from the drive source start position $pickdrivstart2_{i,0}$ to the tail of the source pool and two bit strings from the head of the source pool to the drive source start position $pickdrivstart2_{i,0}$.

12.2 $ls_i$ bit strings with a length of $log_2(workbyte*8/l_{max}))+1$ are picked in sequence from the drive source start position $pickdrivstart2_{i,0}$ (continuing from the beginning after postponing to the tail of the source work pool) to constitute a bit jump value sequence jump2_num(j), j=1, 2, ..., $ls_i$-1.

12.3 j=0, and the output pseudo-random string tmp_str(j), j=0, 1, ..., $ls_i$-1 is emptied.

12.4 Bit strings $pickbit_j$, j=0, 1, ..., $ls_i$-1 in $ls_i$ construct sources are obtained by using the formulas $pickbit_0=pickstart2_{i,0}$, $pickbit_j=(pickbit_{j-1}+jump2_num(j))\%length(Spool_{work})$, j=1, ..., $ls_i$-1, and values of all bits of the strings are picked to constitute the output pseudo-random string tmp_str(j), j=0, 1, ..., $ls_i$-1.

12.5 Pseudo-random bit rearrangement is performed on the output pseudo-random string tmp_str(j), j=0, 1, ..., $ls_i$-1 by using the method in 1.5.3 of the **single reconstruction logic structure,** to obtain the regenerated key bit segment $\underline{bsk2_i}$ of the secondary regenerated key bit segment sequence.

13 Matched bit metabolic logic

13.1 Reserving $pickbit_j$, j=0, 1, ..., $ls_i$-1 in 12.4 to be used as a matched bit metabolic target area.

13.2 Obtaining a metabolic source pseudo-random string metabol_str(j) (j=0, 1, 2, ..., $ls_i$-1) by performing pseudo-random bit flipping $\varsigma$ on the output pseudo-random string tmp_str(j), j=0, 1, ..., $ls_i$-1 obtained in 12.4 using the position chain pos_chain($ls_i$-$L_{min}$,j) (j=0, 1, 2, ..., $ls_i$-1):

13.2.1 The metabolic source pseudo-random string metabol_str(j) (j=0, 1, 2, ..., $ls_i$-1) having the same length as the regenerated key bit segment $\underline{bsk2_i}$ is defined.

13.2.2 If pos_chain($ls_i$-$L_{min}$,0) in the position chain pos_chain($ls_i$-$L_{min}$) having the same length as the regenerated key bit segment $\underline{bsk2_i}$ is equal to 0, the metabolic source pseudo-random string metabol_str(j) (j=0, 1, 2, ..., $ls_i$-1) is equal to 0; and if pos_chain($ls_i$-$L_{min}$,0) in the position chain pos_chain($ls_i$-$L_{min}$) having the same length as the regenerated key bit segment is equal to $ls_i$-1, the metabolic source pseudo-random string metabol_str(j) (j=0, 1, 2, ..., $ls_i$-1) is equal to 1.

Otherwise

13.2.3 After 0⇔1 exchange is performed one by one through values of bits, specified by the position elements in the position chain, at corresponding positions in the output pseudo-random string, a metabolic source pseudo-random string metabol_str(j)= tmp_str [pos_chain($ls_i$-$L_{min}$,j)], (j=0, 1, 2, ..., $ls_i$-1) is spliced.

13.3 Matched bit metabolic target bits (namely picked bits) $pickbit_j$, j=0, 1, ..., $ls_i$-1 are metabolized one by one through the metabolic source pseudo-random string metabol_str(j) (j=0, 1, 2, ..., $ls_i$-1): $pickbit_i$(j)=metabol_str(j) (j=0, 1,

2, ..., $ls_i$-1).

14 Determining a bit segment splitting value as (1/2)$L_{min}$, and setting a splitting formula

14.1 Lengths of an upper half bit segment of the first regenerated key bit segment sequence and a lower half bit segment of the secondary regenerated key bit segment sequence:

$$L1f_i=L2l_i=(1/2)L_{min};$$

Lengths of a lower half bit segment of the first regenerated key bit segment sequence and an upper half bit segment of the secondary regenerated key bit segment sequence:

$$L1l_i=L2f_i=ls_i-(1/2)L_{min}.$$

Therefore:

14.2 Identifications of split half bit segments (also called half segments) (see Fig. 8):

plaintext first/last half bit segments $Mf_i$, $Ml_i$ (plaintext first and last half bit segments)
first key first/last half bit segments $K1f_i$, $K1l_1$ (first and last half bit segments of regenerated key bit segments of first regenerated key bit segment sequence)
secondary key first/last half bit segments $K2f_i$, $K2l_i$ (first and last half bit segments of regenerated key bit segments of secondary regenerated key bit segment sequence)
first transitional first/last half bit segments $T1f_i$, $T1l_i$ (encrypted first and last half bit segments of first regenerated key bit segment sequence)
winding transitional first/last half bit segments $T1f_iX$, $T1l_iX$ (encrypted first/last half bit segments with pseudo-random bit winding implemented of first regenerated key bit segment sequence)
secondary transitional first/last half bit segments $T1f_iX2l_{i-1}$, $T1l_iX2f_i$ (first/last half bit segments encrypted by secondary regenerated key bit segment sequence after implementing of pseudo-random bit winding)
ciphertext first/last half bit segments $Cf_i$, $Cl_i$ (first and last half bit segments of ciphertext)

Encryption/decryption process control of embodiment 2

In the present embodiment, pseudo-random bit winding is embedded only once, so that stacks for order-reversing processing are omitted (stack_k2f, stack_k2l, s_stack_k2l, stack_bsk1 and stack chain, see Fig. 8'-2).

Encryption

1 The structure configuration quantity $ctl_{init}$ is made to be equal to 640 according to **1** of the above **configuration of chaotic computing structure.**
2 The dynamic drive vector $vector_0$, the source pool Spool, the source work pool $SPool_{work}$, the max length of bit segment $L_{max}$, the min length of bit segment $L_{min}$, the pseudo plaintext pM, the end-of-plaintext EOP and the position chain set pos_chain are constructed according to the above **configuration of chaotic computing structure.**
3 According to **encryption/decryption computing formulas and computing units of embodiment 2,** the rebuild plaintext M=pM||plaintext||EOP||$ms_{additn}$ is generated and the bit segment length $ls_0$ is computed.
4 A plaintext bit segment $M_0$ ($Mf_0$||$Ml_0$) with a length being the bit segment length $ls_0$ is picked from the rebuild plaintext M.
5 According to 9 **of encryption/decryption computing formulas and computing units of embodiment 2,** the first regenerated key bit segment $bsk1_0$ ($K1f_0$||$K1l_0$) of the first regenerated key bit segment sequence is constructed. According to 12 **of encryption/decryption computing formulas and computing units of embodiment 2,** the first regenerated key bit segment $bsk2_0$ ($K2f_0$||$K2l_0$) of the secondary regenerated key bit segment sequence is constructed. Growth period metabolism is implemented on the source work pool through the plaintext bit segment $M_0$ (namely the pseudo plaintext $pM_0$) (see 1.5.5.1 of the **single reconstruction logic structure**).
6. According to 11 **of encryption/decryption computing formulas and computing units of embodiment 2,** the position chain pos_chain($ls_0$-$L_{min}$) is metabolized.
7 The last half segment $K2l_0$ of the first regenerated key bit segment $bsk2_0$ of the secondary regenerated key bit segment sequence is stored into cache queue2l.
8 The first regenerated key bit segment $bsk1_0$ of the first regenerated key bit segment sequence is used for XOR encryption of the plaintext bit segment $M_0$ to generate the first transitional bit segments $T1f_0$||$T1l_0$.
9 The position chain pos_chain($ls_0$-$L_{min}$) is used for pseudo-random bit winding of the first transitional bit segments $T1f_0$||$T1l_0$ to generate rearranged transitional bit segments $T1f_0X$||$T1l_0X$.
10 The position chain pos_chain($ls_0$-$L_{min}$) is metabolized according to 11 **of encryption/decryption computing formulas and computing units of embodiment 2.**
11 The secondary key last half bit segment $K2f_0$ is used to encrypt the rearranged transitional last half bit segment $T1l_0X$ to generate a secondary transitional last half bit segment $T1l_0X2f_0$.
12 i=i+1, and the next $ls_i$ is computed.
13 The dynamic drive vector $vector_i$ is picked and a plaintext bit segment $M_i$ with a length of $ls_i$ is picked from the rebuild plaintext M in a postponing manner.
14 queue2l is copied into q_queue2l, and queue2l is emptied.
15 According to 9 **of encryption/decryption computing formulas and computing units of embodiment 2,** the regenerated key bit segment $bsk1_i$ ($K1f_i$||$K1l_i$) of the first regenerated key bit segment sequence is constructed. If the source work pool reaches a mature period, the picked output pseudo-random string is used to implement raise bit metabolism according to 10 **of encryption/decryption computing formulas and computing units of embodiment 2.** According to 12 **of encryption/decryption computing formulas and computing units of embodiment 2,** the regenerated key bit segment $bsk2_i$ ($K2f_i$||$K2l_i$) of the secondary regenerated key bit segment sequence is constructed. If the source work pool reaches the mature period, the picked output pseudo-random string is used to implement matched bit metabolism according to 13 **of encryption/decryption computing formulas and computing units of embodiment 2.** If the source work pool has not reached the mature period, growth period metabolism is implemented on the source work pool through the plaintext bit segment $M_i$ (namely the pseudo plaintext $pM_i$) (see 1.5.5.1 of the **single reconstruction logic structure).**
16 The position chain pos_chain($ls_0$-$L_{min}$) is metabolized according to 11 **of encryption/decryption computing formulas and computing units of embodiment 2.**
17 The regenerated key bit segment $bsk1_i$ of the first regenerated key bit segment sequence is used to compute $M_i$ to obtain the first transitional bit segment $T1f_i$||$T1l_i$.
18 Pseudo-random bit winding is performed on the first transitional bit segment $T1f_i$||$T1l_i$ through a position order of the position chain pos_chain($ls_0$-$L_{min}$) to generate a wound transitional bit segment $T1f_iX$ ||$T1l_iX$.
19 The position chain pos_chain($ls_0$-$L_{min}$) is metabolized.
20 The secondary regenerated key bit segment last half segment $k2l_{i-1}$ in the previous round is picked from the cache q_queue2l and is recombined in a staggered segment manner to regenerate the key bit segment $k2l_{i-1}$||$k2f_i$ which is used to encrypt $T1f_iX$ ||$T1l_iX$ so as to generate staggered secondary transitional bit segments $T1f_iX2l_{i-1}$||$T1l_iX2f_i$ (namely ciphertext bit segments of the present embodiment).
21 The last half segment $k2l_1$ of the regenerated key bit segment of the secondary regenerated key bit segment sequence generated in the present round is stored into the cache queue2l.
22 i=i+1, the next $ls_i$ is computed, and a cyclic condition is judged:

22.1 If $ls_i$ is greater than a length of non-rebuild plaintexts, encryption postprocessing 23 is performed and computing is ended.
22.2 Otherwise, 13 to 22 are executed and staggered segment superposition computing with pseudo-random bit winding embedded of the next round is performed until the condition of 22.1 is met.

23 The non-rebuild remaining plaintexts in 22.1 are appended to a tail end of the ciphertext.

Decryption

Since a pseudo-random bit winding process is embedded into the encryption process, decryption processing must be performed in an inverted order of encryption after the regenerated key bit segments are completely picked and the position chain pos_chain($ls_0$-$L_{min}$) used for pseudo-random bit winding is relieved:

1 The same as 1 and 2 of the encryption process, the structure control quantity is configured: the dynamic drive vector $vector_0$, the source pool Spool, the source work pool $SPool_{work}$, the max length of bit segment $L_{max}$, the min length of bit segment $L_{min}$, the length of the pseudo plaintext pM, the end-of-plaintext EOP and the position chain set pos_chain.

2 i=0, and the bit segment length $ls_0$ is computed.

3 A ciphertext bit segment $C_0$ ($Cf_0||Cl_0$) with a length being the bit segment length $ls_0$ is picked from a ciphertext C.

4 The regenerated key bit segment $bsk1_0$ ($K1f_0||K1l_0$) of the first regenerated key bit segment sequence is constructed. The regenerated key bit segment $bsk2_0$ ($K2f_0||K2l_0$) of the secondary regenerated key bit segment sequence is constructed. Growth period metabolism is implemented on the source work pool through the plaintext bit segment $M_0$ (namely the pseudo plaintext $pM_0$) (see 1.5.5.1 of the **single reconstruction logic structure).**

5 The position chain pos_chain($ls_i$-$L_{min}$) is metabolized according to 11 **of encryption/decryption computing formulas and computing units of embodiment 2.**

6 The last half segment $k2l_0$ of the regenerated key bit segment of the secondary regenerated key bit segment sequence is stored in stack_k2l.

7 A secondary key first half bit segment $k2f_0$ is used to perform XOR on the ciphertext last half bit segment $Cl_0$ to obtain the transitional last half bit segment $T1l_0X$ which is rearranged during encryption.

8 $T1l_0X$ obtained in 7 is spliced with the ciphertext first half bit segment $Cf_0$ to obtain a rearranged transitional bit segment $T1f_0X||T1l_0X$, and pseudo-random bit winding relieving is performed according to the position order of the position chain pos_chain($ls_0$-$L_{min}$) to obtain the first transitional bit segment $T1f_0||T1l_0$.

9 The position chain pos_chain($ls_0$-$L_{min}$) is metabolized.

10 The regenerated key bit segment $bsk1_0$ of the first regenerated key bit segment sequence is used to decrypt the obtained transitional bit segment $Tlf_0||T1l_0$ to obtain a plaintext bit segment $Mf_0||Ml_0$.

11 i=i+1, $ls_i$ is computed and the dynamic drive vector $vector_i$ is picked.

11.1 If $ls_i$ is greater than the length of the non-rebuild plaintexts, decryption postprocessing 22 is performed.

11.2 Otherwise, a ciphertext bit segment $C_i$ ($Cf_i||Cl_i$) with a length of $ls_i$ is picked from the ciphertext C.

12 stack_k2l is copied to s_stack_k2l, and stack_k2l is emptied.

13 According to 9 **of encryption/decryption computing formulas and computing units of embodiment 2,** the regenerated key bit segment $bsk1_i$ ($K1f_i||K1l_i$) of the first regenerated key bit segment sequence is constructed. If the source work pool reaches the mature period, the picked output pseudo-random string is used to implement raise bit metabolism according to 10 **of encryption/decryption computing formulas and computing units of embodiment 2.** According to 12 **of encryption/decryption computing formulas and computing units of embodiment 2,** the regenerated key bit segment $bsk2_i$ ($K2f_i||K2l_i$) of the secondary regenerated key bit segment sequence is constructed. If the source work pool reaches the mature period, the picked output pseudo-random string is used to implement matched bit metabolism according to 13 **of encryption/decryption computing formulas and computing units of embodiment 2.**

14 The position chain pos_chain($ls_i$-$L_{min}$) is metabolized according to 11 **of encryption/decryption computing formulas and computing units of embodiment 2.**

15 The last half segment $k2l_i$ of regenerated key bit segment of the secondary regenerated key bit segment sequence is stored in stack_k2l.

16 The regenerated key bit segments $k2l_{i-1}||k2f_i$ are recombined in a staggered segment manner and then the ciphertext bit segment $C_i$ ($Cf_i||Cl_i$) is decrypted to obtain the transitional bit segments $T1f_iX||T1l_iX$ which are rearranged during encryption.

17 The position chain pos_chain($ls_i$-$L_{min}$) is used to relieve pseudo-random bit winding for $T1f_iX||T1l_iX$ to obtain the first transitional bit segments $T1f_i||T1l_i$.

18 The position chain pos_chain($ls_i$-$L_{min}$) is metabolized.

19 The regenerated key bit segment $bsk1_i$ of the first regenerated key bit segment sequence is used to decrypt the first transitional bit segments $T1f_i||T1l_i$ to obtain the plaintext bit segments $Mf_i||Ml_i$.

20 If the source work pool has not reached the mature period, the plaintext bit segment $M_i$ (namely the pseudo plaintext $pM_i$) obtained by decryption is used to perform growth period metabolism on the source work pool (see 1.5.5.1 of the **single reconstruction logic structure).**

21 Steps 11 to 20 are repeated to perform the next round of decryption computing of embedded pseudo-random bit winding until $ls_i$ is greater than a length of non-decrypted ciphertexts.

22 Decryption postprocessing is performed.

22.1 The pseudo plaintext pM in the plaintext obtained by decryption is removed.

22.2 Whether the end-of-plaintext EOP in the plaintext obtained by decryption is correct or not is checked, and if the end-of-plaintext EOP is correct, the end-of-plaintext EOP and the subsequent supplementing pseudo-random string $ms_{additn}$ are removed; and if the end-of-plaintext EOP is not correct, it is shown that errors occur in processes of encryption, transmission and decryption.

## Description of invention features

1 An infinite non-looping regenerated key bit segment sequence constructing mechanism is adopted to implement staggered segment superposition encryption, so that safety is fully guaranteed. Since bit computing is mainly used in bottom looping, the implementation speed of the present invention can also be guaranteed.
2 Compared with a traditional sequence encryption method, the present invention can configure corresponding encryption models according to the requirements of application forms, and the application range is wider. It has certain adjustable space and integration space with other methods.
3 Since the structure configuration quantity can be adjusted as required, the present invention can meet the security needs of increasing computing power. It can be proved that: there is no attack algorithm of creaking the polynomial time complexity of the key except brute force attack to the key, that is, the present invention provides an example of P<nP.

It can be understood that for those skilled in the art, equivalent replacement, change or simplification of the technical solution and inventive concept of the present invention shall belong to the protection scope of the appended claims of the present invention.

## Claims

**1.** A sequence encryption method for reconstructing a key, wherein structure control quantity is generated by using a key and structure configuration quantity, and a chaotic computing structure is controlled by using the structure control quantity to dispatch a matched compound logic to realize chaotic bit-segment stream encryption; a construct source and a drive source are pseudo-randomly reconstructed round by round, and the construct source is pseudo-randomly controlled by using the drive source to reconstruct a regenerated key bit segment; different regenerated key bit segment sequences are wound in a staggered segment manner by integrating more than one regenerated key bit segment sequence; staggered segment winding between front and back bit segments, irrelevant to staggered segment winding between the regenerated key bit segment sequences, is realized by using pseudo-random bit winding; an invention core comprises three closely-related computing: (A) the chaotic computing structure is constructed, a source work pool is metabolized segment by segment in an encryption process so as to pick bits in the construct source for the drive source and the construct source borne by the source work pool segment by segment by controlling a bit fetching logic with bits in the drive source, and the regenerated key bit segment is pseudo-randomly reconstructed; (B) the bit fetching logic and a bit metabolic logic are integrated based on the chaotic computing structure to construct a regenerated key bit segment infinite non-looping construction logic that "non-metabolized construct source bits are pseudo-randomly picked in a staggered manner or metabolized construct source bits are picked in a position-coinciding manner"; and (C) more than one different regenerated key bit segment sequence is encrypted in a staggered segment superposition manner based on the chaotic computing structure; and a technical solution comprises:

(1) the chaotic computing structure is constructed through computing structure configuration quantity via the key, to support pseudo-randomly determining sequence encryption bit-segment by bit-segment of all computing parameters;
(2) an initial source work pool is loaded via the key to lead a process of chaotic encryption with logic winding bit-segment by bit-segment;
(3) the source work pool is expanded with a pseudo plaintext independently constructed by an encryption party to make the encryption process further chaotic so as to increase a safety threshold value;
(4) a source work pool round-by-round metabolism mechanism is established, and the bit fetching logic and the bit metabolic logic are configured in a matched manner to establish the regenerated key bit segment construction logic that "non-metabolized construct source bits are pseudo-randomly picked in a staggered manner or metabolized construct source bits are picked in a position-coinciding manner";
(5) a probabilistically-occurring periodic law of the constructed regenerated key bit segment sequence is digested with the chaotic computing structure;
(6) different regenerated key bit segment sequences are constructed by using the differentiated construct source, drive source, bit fetching logic and bit metabolic logic, and staggered segment superposition encryption with pseudo-random bit winding embedded of the different regenerated key bit segment sequences is realized based on the chaotic computing structure; and

(7) an end-of-plaintext is established based on the key to resolve staggering between a plaintext ending position and a segmented computing ending position, and the end-of-plaintext is used as a check code for decryption computing correctness.

**2.** The sequence encryption method for reconstructing the key according to claim 1, wherein the structure control quantity is configured by the key through the structure configuration quantity to control chaotic variable-length segmented encryption computing:

(1) a length of a source pool Spool and a length of the initial source work pool $Spool_{work}$ are configured by using the key in combination with the structure configuration quantity $ctl_{init}$;
(2) a picking position of an initial dynamic drive vector $vector_0$ in the source work pool $Spool_{work}$ is pseudo-randomly determined according to the key;
(3) a length of the pseudo plaintext pM is determined according to the length of the source pool Spool and a length of the key;
(4) a max length of bit segment $L_{max}$ and a min length of bit segment $L_{min}$ are pseudo-randomly determined according to the initial dynamic drive vector $vector_0$;
(5) the end-of-plaintext EOP is generated according to the initial dynamic drive vector $vector_0$ and other bit strings in the key;
(6) a position chain set pos_chain is constructed according to the max length of bit segment $L_{max}$ and the min length of bit segment $L_{min}$;
(7) the pseudo plaintext pM, a plaintext and the end-of-plaintext EOP are spliced, and a supplementing pseudo-random string $ms_{additn}$ with a length of $L_{max}$ is appended, so as to reconstruct a plaintext M for computing; and
(8) the chaotic computing structure is controlled through the structure control quantity obtained in (1) to (6) to encrypt the reconstructed plaintext M.

**3.** The sequence encryption method for reconstructing the key according to claim 1, wherein the source work pool $SPool_{work}$ is initially loaded by using the key, and a process of constructing the regenerated key bit segment sequence is started.

**4.** The sequence encryption method for reconstructing the key according to claim 1, wherein the source work pool $SPool_{work}$ is expanded with the pseudo plaintext pM, irrelevant to a content of a plaintext, independently constructed by the encryption party; and then the process of reconstructing the regenerated key bit segment sequence is jointly led by the key and the pseudo plaintext pM to increase the safety threshold value.

**5.** The sequence encryption method for reconstructing the key according to claim 1, wherein the source work pool $SPool_{work}$ is metabolized by using the bit metabolic logic round by round according to configuration of the computing structure so as to control the bit fetching logic by the drive source to pick a bit value of the construct source, and a bit-by-bit regenerated key bit segment reconstruction logic that "non-metabolized construct source bits are pseudo-randomly picked in a staggered manner or metabolized construct source bits are picked in a position-coinciding manner" is realized;

(1) the source work pool is metabolized with the bit metabolic logic, and the regenerated key bit segment is reconstructed from the source work pool with the bit fetching logic;
(2) the bit fetching logic is listed below:

(2.1) go one by one logic;

a construct source start byte $pickstart_{0,0}$ in a first round is pseudo-randomly determined in the source work pool through an initial dynamic drive vector $vector_0$;
a relative segment difference dif, dif < $length(Spool_{work})$ is pseudo-randomly obtained through the initial dynamic drive vector $vector_0$, and a drive source start position $pickdrivstart_{0,0}=(pickstart_{0,0}+length(Spool_{work})-dif)\%length(Spool_{work})$ in the first round is determined in the source work pool;
one byte is advanced round by round, and continues from the beginning after reaching a tail end of the source work pool $Spool_{work}$, and the following in each subsequent round is determined: 1) a construct source start byte $pickstart_{i,0}=(pickstart_{i-1,0}+8)\%length(Spool_{work})$ and 2) a drive source start position $pickdrivstart_{i,0}=(pickdrivstart_{i-1,0}+8)\%length(Spool_{work})$;
a byte segment constituted by the $ls_i$ byte beginning from the construct source start byte in the source work pool is used as a construct source $pickarea_i$ in each round;

a bit string constituted by n times of bits of $ls_i$ beginning from the drive source start position in the source work pool is used as a drive source $pickdrivearea_i$, wherein n is 3 or 4 or 8;

a drive element sequence is constituted by bit string sequences which are constituted by every 3 or 4 or 8 bits in sequence in the drive source $pickdrivearea_i$, and 3 bits in each drive element are picked as drive values to constitute a drive value sequence $pickdriver_i(j)$, j=0, 1, 2, ..., $ls_i$-1;

drive values in the drive value sequence and construction bytes $pickdriver_i(j)/pickarea_i(j)$, j=0, 1, 2, ..., $ls_i$-1 in the construct source are sequentially paired;

values of bits of the construction bytes specified by the drive values are used as output bit values in pairs, and are spliced into an output pseudo-random string tmp_str(j), j=0, 1, 2, ..., $ls_i$-1;

the constructed output pseudo-random string tmp_str(j), j=0, 1, 2, ..., $ls_i$-1 is used as, or is subjected to pseudo-random bit rearrangement and then used as, a regenerated key bit segment $\underline{bsk_i}$;

(2.2) go chain logic;

when the chaotic computing structure is configured, a position chain set pos_chain is constructed with a max length of bit segment $L_{max}$ and a min length of bit segment $L_{min}$, and is initialized through the key;

the construct source start byte $pickstart_{0,0}$ in the first round is pseudo-randomly determined in the source work pool through the initial dynamic drive vector $vector_0$;

the relative segment difference dif, dif < length($Spool_{work}$) is pseudo-randomly obtained through the initial dynamic drive vector $vector_0$, and the drive source start position $pickdrivstart_{0,0}$=($pickstart_{0,0}$+length($Spool_{work}$)-dif)%length($Spool_{work}$) in the first round is determined in the source work pool;

one byte is advanced round by round, and continues from the beginning after reaching the tail end of the source work pool $Spool_{work}$, and the following in each subsequent round is determined: 1) the construct source start byte $pickstart_{i,0}$=($pickstart_{i-1,0}$+8)%length($Spool_{work}$) and 2) a drive source start bit $pickdrivstart_{i,0}$=($pickdrivstart_{i-1,0}$+8)%length($Spool_{work}$);

the byte segment constituted by the $ls_i$ byte beginning from the construct source start byte in the source work pool is used as a construct source $pickarea_i$;

the bit string composed of n times of bits of $ls_i$ beginning from the drive source start position in the source work pool is used as the drive source $pickdrivearea_i$, wherein n is 3 or 4 or 8;

a bit string constituted by every 3 or 4 or 8 bits in sequence in the drive source $pickdrivearea_i$ is used as a drive element to constitute a drive element sequence, and 3 bits in the drive element are picked as drive values to constitute the drive value sequence $pickdriver_i(j)$, j=0, 1, 2, ..., $ls_i$-1;

drive values in the drive value sequence and construction bytes $pickdriver_i(j)/pickarea_i(pos_chain(ls_i-L_{min},j))$, j=0, 1, 2, ..., $ls_i$-1 in the construct source determined by position elements $pos_chain(ls_i-L_{min},j)$ in the position chain $pos_chain(ls_i-L_{min})$ are sequentially paired;

the values of the bits in the construction bytes specified by the drive values are used as output bit values in pairs, and are spliced into an output pseudo-random string tmp_str(j), j=0, 1, 2, ..., $ls_i$-1;

the constructed output pseudo-random string tmp_str(j), j=0, 1, 2, ..., $ls_i$-1 is used as, or is subjected to pseudo-random bit rearrangement and then used as, the regenerated key bit segment $\underline{bsk_i}$;

(2.3) bit jump logic;

a construct source start position $pickstart_{i,0}$ in each round is pseudo-randomly determined through a dynamic drive vector $vector_i$, and bit strings from the construct source start position $pickstart_{i,0}$ to the tail end of the source work pool and bit strings from a head end of the source work pool to the construct source start position $pickstart_{i,0}$ are spliced into a construct source $pickarea_i$;

a relative segment difference dif, dif ≤ length($Spool_{work}$) is pseudo-randomly obtained through the dynamic drive vector $vector_i$, a drive source start position $pickdrivstart_{i,0}$=($pickstart_{i,0}$+length($Spool_{work}$)-dif)%length($Spool_{work}$) in each round is determined in the source work pool, and bit strings from the drive source start position $pickdrivstart_{i,0}$ to the tail end of the source work pool and bit strings from the head end of the source work pool to the drive source start position $pickdrivstart_{i,0}$ are spliced into a drive source $pickdrivearea_i$;

$ls_i$ fixed-length bit sub-strings are picked from the drive source in a jumping or non-jumping manner to be used as bit jump values so as to constitute a bit jump value sequence junp_num(j), j=0, 1, 2, ..., $ls_i$-1, and continue from the beginning after reaching a tail of the source work pool;

picked bits are determined in a jumping manner (continuing from the beginning after reaching the tail of the source work pool) from the construct source one by one, j=0, 1, 2, ..., $ls_i$-1, with the bit jump values in the bit jump value sequence as intervals, and values of the bits are spliced into an output pseudo-random string tmp_str(j), j=0, 1, 2, ..., $ls_i$-1;

the constructed output pseudo-random string tmp_str(j), j=0, 1, 2, ..., $ls_i$-1 is used as, or is subjected to pseudo-random bit rearrangement and then used as, the regenerated key bit segment $\underline{bsk_i}$;

(2.4) raise bit logic:

a construct source start byte $pickstart_0$ in a first round is pseudo-randomly determined through an initial dynamic drive vector $vector_0$; and then a construct source start byte $pickstart_i$ in each round is postponed by one byte round by round, and continues from the beginning after postponing to the tail end of the source work pool, wherein $pickstart_i$=($pickstart_{i-1}$+8)%length($Spool_{work}$);

the construct source $pickarea_i$ in each round is constituted by $ls_i$ bytes postponing from the construct source start byte $pickstart_i$, and continues from the beginning after postponing to the tail end of the source work pool;

a picked bit of the first construction byte in the above construct source $pickarea_i$ is made to be the $0^{th}$ bit, then picked bits of the construction bytes are increased by one bit byte by byte, and continue from 0 after reaching 7, and values of the picked bits of the construction bytes are sequentially spliced into an output pseudo-random string tmp_str(j), j=0, 1, 2, ..., $ls_i$-1;

the constructed output pseudo-random string tmp_str(j), j=0, 1, 2, ..., $ls_i$-1 is used as, or is subjected to pseudo-random bit rearrangement and then used as, the regenerated key bit segment $\underline{bsk_i}$;

(3) the bit metabolic logic and relevant metabolism thereof are listed below:

(3.1) metabolism of the source work pool $SPool_{work}$ in a growth period of length($SPool_{work}$)<length(SPool):

when length(Spool)-length($Spool_{work}$) $\geq ls_i$, pseudo plaintext sub-strings $pM_i$ with lengths being $ls_i$ sequentially picked from the plaintext are appended or pseudo-randomly inserted into the source work pool $SPool_{work}$ during encryption, and a length length($Spool_{work}$) of the source work pool $SPool_{work}$ is maintained to be equal to length($Spool_{work}$)+$ls_i$; and pseudo plaintext sub-strings $pM_i$ with lengths being $ls_i$ picked from decrypted plaintext are appended or pseudo-randomly inserted into the source work pool $SPool_{work}$ during decryption, and the length length($Spool_{work}$) of the source work pool $SPool_{work}$ is maintained to be equal to length($Spool_{work}$)+$ls_i$;

when length(Spool)-length($Spool_{work}$)<$ls_i$, pseudo plaintext sub-strings $pM_i$ with lengths being length(Spool)-length($Spool_{work}$) sequentially picked from the plaintext are appended or pseudo-randomly inserted into the source work pool $SPool_{work}$ during encryption, and length($Spool_{work}$) is made to be equal to length(Spool); pseudo plaintext sub-strings $pM_i$ with lengths being length(Spool)-length($Spool_{work}$) picked from decrypted plaintext are appended or pseudo-randomly inserted into the source work pool $SPool_{work}$ during decryption, and length($Spool_{work}$) is made to be equal to length(Spool); and the source work pool reaches a mature period;

(3.2) the source work pool is metabolized by adopting the bit metabolic logic in the mature period of length($SPool_{work}$)=length(SPool) of the source work pool $SPool_{work}$:

(3.2.1) raise bit metabolic logic:

$ls_i$ bytes are selected from the source work pool from the drive source start position $pickdrivstart_{i,0}$ to constitute a raise bit metabolic target area $metabolarea_i$; and the raise bit metabolic target area $metabolarea_i$ is moved backwards by one byte round by round in the source work pool, and continues from the beginning after reaching the tail end of the source work pool;

pseudo-random bit flipping is performed on an original metabolic source random string, namely the output pseudo-random string tmp_str(j), j=0, 1, 2, ..., $ls_i$-1 of any bit fetching logic by using the position chain pos_chain($ls_i$-$L_{min}$), wherein pseudo-random bit rearrangement must be mutually different from pseudo-random bit rearrangement during construction of the regenerated key bit segment, so that a metabolic source random string metabolsrci(j), j=0, 1, 2, ..., $ls_i$-1 is obtained;

it is set that a metabolizing bit in the first byte of the raise bit metabolic target area $metabolarea_i$ is the $0^{th}$ bit, and then is increased by one bit byte by byte, and continues from 0 after reaching 7, and the bits are used as metabolizing bits of all bytes of the raise bit metabolic target area to obtain a metabolizing bit sequence metabolbiti(j), j=0, 1, 2, ..., $ls_i$-1 ; values $metabolbit_i$(j)=$metabolsrc_i$(j), j=0, 1, 2, ..., $ls_i$-1 of the metabolizing bits of the corresponding bytes of the raise bit metabolic target area are sequentially replaced bit by bit with values of bits of the metabolic source random string metabolsrci(j), j=0, 1, 2, ..., $ls_i$-1;

(3.2.2) matched bit metabolic logic:

when the output pseudo-random string tmp_str(j), j=0, 1, 2, ..., $ls_i$-1 is constructed through any bit fetching logic, bits thereof are sequentially spliced to serve as a picked bit sequence $pickedbit_i$(j), j=0, 1, 2, ..., $ls_i$-1;
pseudo-random bit flipping is performed on an original metabolic source pseudo-random string, namely the output pseudo-random string tmp_str(j), j=0, 1, 2, ..., $ls_i$-1 of any bit fetching logic by using the position chain pos_chain($ls_i$-$L_{min}$), wherein pseudo-random bit rearrangement must be mutually different from pseudo-random bit rearrangement during construction of the regenerated key bit segment, so that a metabolic source pseudo-random string $metabolsrc_i$(j), j=0, 1, 2, ..., $ls_i$-1 is obtained;
picked bit metabolism $pickedbit_i$(j)=$metabolsrc_i$(j), j=0, 1, 2, ..., $ls_i$-1 is implemented;

(3.3) the position chain pos_chain($ls_i$-$L_{min}$) is metabolized by using randomness of the key:

an empty transitional position chain tmp_chain with a length of (1/2) length($vector_i$)-1 is established;
values represented by every two bits of the dynamic drive vector $vector_i$ are sequentially picked to be used as jump values so as to obtain a jump value sequence $rp_j$, j=0, 1, ..., min((1/2)length($vector_i$)-1, $ls_i$-1);
it is set that $p_0$=$rp_0$, $p_j$=$p_{j-1}$+$rp_j$+1,
1) tmp_chain(j)=pos_chain($ls_i$-$L_{min}$, $p_j$) is computed, and 2) a position element pos_chain($ls_i$-$L_{min}$, $p_j$), j=0, 1, ..., (1/2) length($vector_i$)-1 is removed, so that pos_chain($ls_i$-$L_{min}$) is partially or completely pseudo-randomly guided into tmp_chain;
when (1/2)length($vector_i$) < $ls_i$, (1/2)length($vector_i$) position elements generated in the new position chain tmp_chain are appended to a tail end of the compressed position chain pos_chain($ls_i$-$L_{min}$); and when (1/2)length($vector_i$) ≥ $ls_i$, the used position chain pos_chain($ls_i$-$L_{min}$) is replaced with the new position chain tmp_chain;

(3.4) the dynamic drive vector $vector_i$ is metabolized through one of the following two

(3.4.1) the dynamic drive vector $vector_i$ is metabolized in a way of backwards postponing by one byte round by round in the source work pool;
(3.4.2) an equal-length bit string mutually different from a dynamic drive vector $vector_{i-1}$ in the previous round in the source work pool and the dynamic drive vector $vector_{i-1}$ in the previous round are subjected to XOR round by round to generate a new $vector_i$;

(4) pseudo-random bit rearrangement on the output pseudo-random string before generation of the regenerated key bit segment, and pseudo-random bit flipping
on the original metabolic source pseudo-random string, namely the output pseudo-random string tmp_str(j), j=0, 1, 2, ..., $ls_i$-1 of any bit fetching logic:

(4.1) pseudo-random bit rearrangement on the output pseudo-random string tmp_str(j), j=0, 1, 2, ..., $ls_i$-1 obtained through the bit fetching logic is realized based on randomness of the position chain pos_chain($ls_i$-$L_{min}$);
(4.2) pseudo-random bit flipping on the original metabolic source pseudo-random string, namely the output pseudo-random string tmp_str(j), j=0, 1, 2, ..., $ls_i$-1 of any bit fetching logic is realized based on randomness of the position chain pos_chain($ls_i$-$L_{min}$), comprising:

(4.2.1) pseudo-random bit rearrangement different from (4.1) is implemented on the original metabolic source pseudo-random string and the output pseudo-random string tmp_str(j), j=0, 1, 2, ..., $ls_i$-1 obtained through any bit fetching logic based on randomness of the position chain pos_chain($ls_i$-$L_{min}$);
(4.2.2) bit-by-bit O⇔1 exchange is performed when pseudo-random bit rearrangement of (4.2.1) is implemented;

(4.2.3) sugaring: the metabolic source pseudo-random string being replaced by a total '0' or total '1' bit string is triggered according to states which intermittently occur of the computing parameters, wherein examples of the states which intermittently occur of the computing parameters are: (a) a position element at a specific position in the position chain is equal to 0 or $ls_i$, or (b) a value of a determined byte of the dynamic drive vector $vector_i$ is equal to 0 or $ls_i$, or (c) the above (a) or (b) is combined without conflict; and

(5) the bit fetching logic, the bit metabolic logic and other listed relevant logics are used in a matched manner under supporting by the chaotic computing structure, to establish the regenerated key bit segment sequence that "non-metabolized construct source bits are pseudo-randomly picked in a staggered manner or metabolized construct source bits are picked in a position-coinciding manner".

**6.** The sequence encryption method for reconstructing the key according to claim 1, wherein the probabilistically-occurring periodic law of the constructed regenerated key bit segment sequence is digested with the chaotic computing structure;

(1) regularity of change of metabolizing bits is disturbed by using pseudo-random change of a bit segment length $ls_i$ caused by the chaotic computing structure; and
(2) regularity of change of values of repeatedly picked bits is disturbed by using pseudo-random change of the bit segment length $ls_i$ caused by the chaotic computing structure.

**7.** The sequence encryption method for reconstructing the key according to claim 1, wherein staggered segment winding between the different regenerated key bit segment sequences is realized based on the chaotic computing structure, and pseudo-random bit winding is embedded to realize staggered segment winding between front and back bit segments, so as to form staggered segment superposition encryption;

(1) plaintext bit segments, regenerated key bit segments and ciphertext bit segments are split with the same scale based on the chaotic computing structure;

(1.1) $\lambda$, $(1/2)L_{min} \leq \lambda < (1/2)L_{max}$ determined by bit segment length limited values $L_{min}$ and $L_{max}$ is used as a bit segment splitting scale sd;
(1.2) with sd as a segment staggering segment difference, a segment difference between two sets of regenerated key bit segment sequences with the same quantity of s is determined, wherein $s \geq 1$;

(2) two different sets of regenerated key bit segment sequences which belong to different splitting are constructed;

(2.1) two sets of regenerated key bit segment sequences are established, namely a first regenerated key bit segment sequence set $bsk1_{i,q}$ and a secondary regenerated key bit segment sequence set $bsk2_{i,q}$, q=1, 2, ..., s, and i=0, 1, 2, ..., wherein q is a subscript of each regenerated key bit segment sequence belonging to each set, s is the number of the regenerated key bit segment sequences in each set, and i is a round number;
(2.2) the regenerated key bit segments in each set of regenerated key bit segment sequences are split in accordance with the scale sd: $k1f_{i,q}$, a length being sd; $k1l_{i,q}$, a length being $ls_i$-sd; $k2f_{i,q}$, a length being $ls_i$-sd; and $k2l_{i,q}$, a length being sd; and the plaintext bit segments are also split by the same scale: $Mf_i$, a length being sd; and $Ml_i$, a length being $ls_i$-sd;
(2.3) differentiated bit fetching logic and bit metabolic logic, or differentiated construct source and drive source are determined for each regenerated key bit segment sequence;

(3) 2s-1 pseudo-random bit rearrangement logics realized round by round with a position chain $pos_chain(ls_i-L_{min}, j)$, j=0, 1, ..., $ls_i$-1 are determined;
(4) staggered segment superposition encryption of different regenerated key bit segment sequences which are based on same-scale splitting and have pseudo-random bit winding embedded:

(4.1) each last half key bit segment $k2l_{i,q}$, q=1, 2, ..., s of the secondary regenerated key bit segment sequence set is stored in s buffer areas with a length of sd;
(4.2) except the first round, staggered segment encryption is performed in other rounds according to the following sequence:

$\oplus k1f_{i,q} \| k1l_{i,q}$, q=0;
⊝i,r, r=r+1; Ⓢ;
$\oplus k2l_{i-1,q} \| k2f_{i,q}$; q=q+1;

⊝i,r; r=r+1; Ⓢ;
$\oplus k1f_{i,s} \| k1l_{i,s}$;

⊝i,2s-1; Ⓢ;
$\oplus k2l_{i-1,s} \| k2f_{i,s}$;

(5) staggered segment decryption of different regenerated key bit segment sequences which are based on same-scale splitting and have pseudo-random bit winding embedded:

(5.1) the following is established before decryption is started: (1) a position chain stack stack_chain with a length of $L_{max}$, configured to store a position chain; (2) a half-stack stack_k2f with a length of $L_{max}$-sd, configured to store first half bit segments of s secondary regenerated key bit segments; (3) a half-stack stack_k21 with a length of sd, configured to store last half bit segments of s secondary regenerated key bit segments for staggered segment splicing of the next round; (4) a staggered segment half-stack s_stack_k2l with a length of sd, configured to copy half key bit segments $k2l_{i01,q}$ stored in the half-stack stack_k2l in the previous round so as to splice a staggered segment secondary regenerated key bit segment $k2l_{i-1,q} \| k2f_{i,q}$; and (5) a whole stack stack_bsk1 with a length of $L_{max}$, configured to store a first regenerated key bit segment used in the current round;
(5.2) except the first round, at the beginning of decryption in each round, the last half bit segments $k2l_{i-1,q}$, q=0, 1, ..., s-1, of all the secondary regenerated key bit segments which are pushed into stack_k2l in the previous round are copied into s_stack_k2l, and stack_k2l is emptied;
(5.3) except the first round, s times of computing quantity reconstruction or picking are implemented in each round according to an encryption processing sequence: (1) a regenerated key bit segment $bsk1_{i,q}$ is reconstructed and pushed into the whole stack stack_bsk1, and the position chain pos_chain($ls_i$-$L_{min}$) is metabolized; (2) the position chain pos_chain($ls_i$-$L_{min}$) is pushed into the position chain stack stack_chain and is metabolized; (3) a regenerated key bit segment $bsk2_{i,q}$, q=0, 1, ..., s-1, is reconstructed and pushed into the half-stacks stack_k2f and stack_k2l, and the position chain pos_chain($ls_i$-$L_{min}$) is metabolized; and (4) except the $s^{th}$ time, the position chain pos_chain($ls_i$-$L_{min}$) is pushed into the position chain stack stack_chain and is metabolized;
(5.4) except the first round, staggered segment decryption is performed in other rounds according to the opposite sequence of (5.3):

$\oplus k2l_{i-1,q} \| k2f_{i,q}$, q=s;

⊝i,r, r=2s-2; r=r-1;
$\oplus k1f_{i,q} \| k1l_{i,q}$, q=s; q=q-1;
Qi,r, r=r-1;
$\oplus k2l_{i-1,0} \| k2f_{i,0}$;

⊝
i,0;
$\oplus k1f_{i,0} \| k1l_{i,0}$;

(5.5) a length of a half bit segment in each round and each time of decryption is sd or $ls_i$-sd, and excess parts of $L_{max}$_$ls_i$ are omitted.

**8.** The sequence encryption method for reconstructing the key according to claim 1, wherein staggering of the plaintext ending position and an encryption ending position caused by the chaotic encryption process is resolved by the end-of-plaintext EOP; and the end-of-plaintext EOP is used as the check code for decryption computing correctness;

(1) at the beginning of encryption/decryption, the end-of-plaintext EOP and the supplementing pseudo-random string $ms_{additn}$ with the length being the max length of bit segment $L_{max}$ are generated according to the initial dynamic drive vector $vector_0$, and appended to the tail end of the plaintext;
(2) in an encryption process, when a bit segment length $ls_i$ computed is smaller than a length of a non-encrypted plaintext, computing is stopped; and

(3) after decryption is completed, a plaintext ending position is judged through the end-of-plaintext EOP, and correctness of a plaintext generated by decryption is checked.

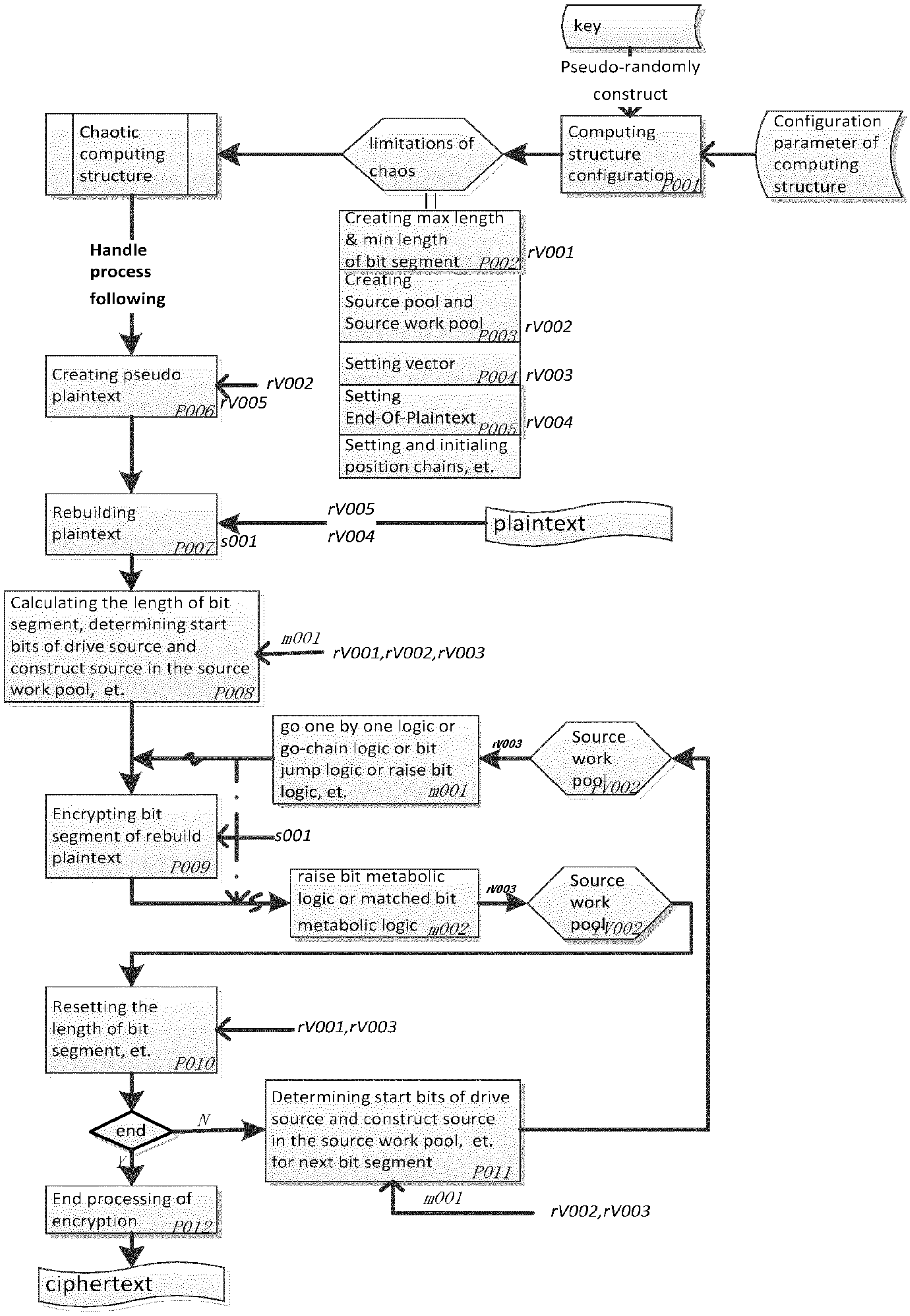
key
Pseudo-randomly construct
Configuration parameter of computing structure
Computing structure configuration P001
limitations of chaos
Chaotic computing structure
Creating max length & min length of bit segment P002
rV001
Creating Source pool and Source work pool P003
rV002
Setting vector P004
rV003
Setting End-Of-Plaintext P005
rV004
Setting and initialing position chains, et.
Handle process following
Creating pseudo plaintext P006
rV002
rV005
Rebuilding plaintext P007
s001
rV005
rV004
plaintext
Calculating the length of bit segment, determining start bits of drive source and construct source in the source work pool, et. P008
m001
rV001,rV002,rV003
go one by one logic or go-chain logic or bit jump logic or raise bit logic, et. m001
rV003
Source work pool rV002
Encrypting bit segment of rebuild plaintext P009
s001
raise bit metabolic logic or matched bit metabolic logic m002
rV003
Source work pool rV002
Resetting the length of bit segment, et. P010
rV001,rV003
end
N
Y
Determining start bits of drive source and construct source in the source work pool, et. for next bit segment P011
m001
rV002,rV003
End processing of encryption P012
ciphertext

Fig. 1

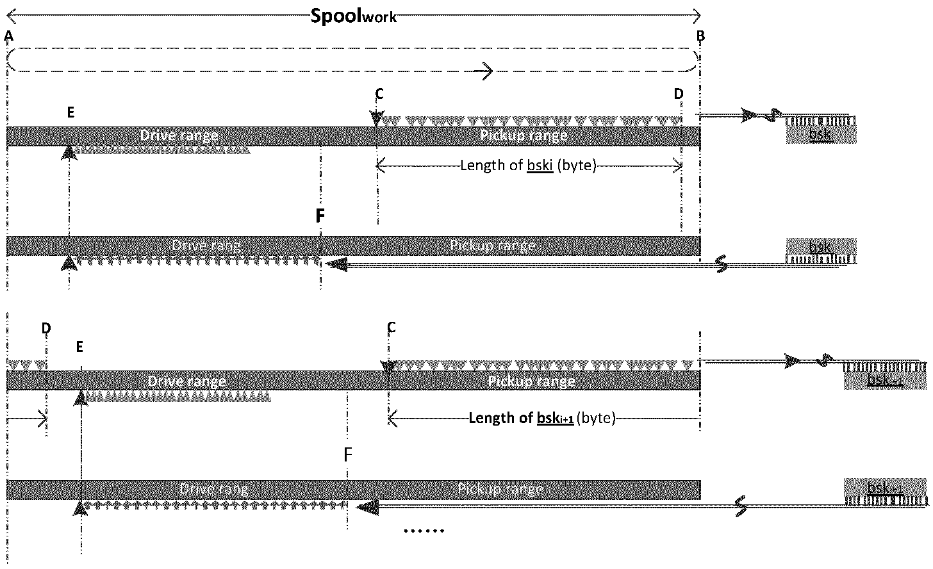
Spoolwork
A
B
C
D
E
Drive range
Pickup range
Length of bski (byte)
bski
F
Drive rang
Pickup range
bski
D
C
E
Drive range
Pickup range
Length of bski+1 (byte)
bski+1
F
Drive rang
Pickup range
bski+1
......

Fig. 2

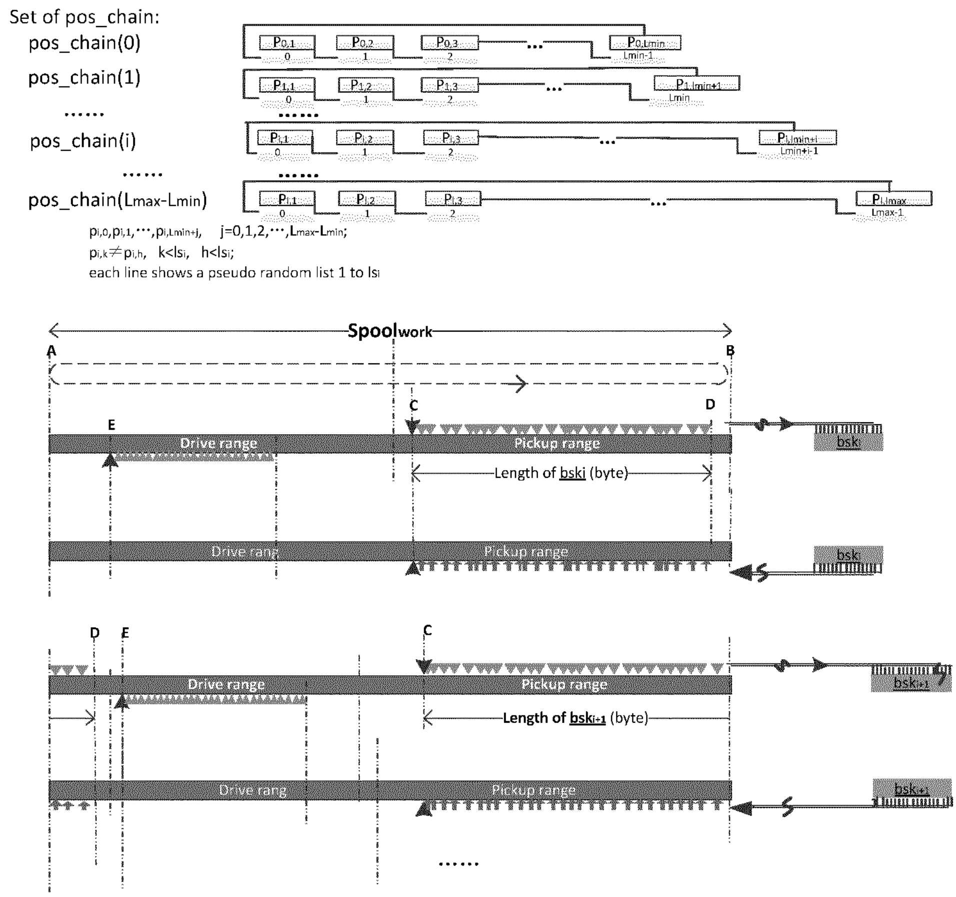
Set of pos_chain:
pos_chain(0)
pos_chain(1)
pos_chain(i)
pos_chain(Lmax-Lmin)
each line shows a pseudo random list 1 to lsi
Spoolwork
A
B
C
D
E
Drive range
Pickup range
Length of bski (byte)
bski
Length of bski+1 (byte)
bski+1

Fig. 3

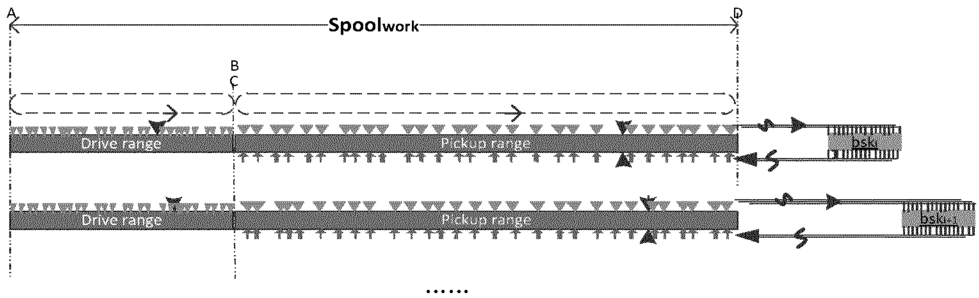
A
D
Spoolwork
B
C
Drive range
Pickup range
bski
Drive range
Pickup range
bski+1
......

Fig. 4

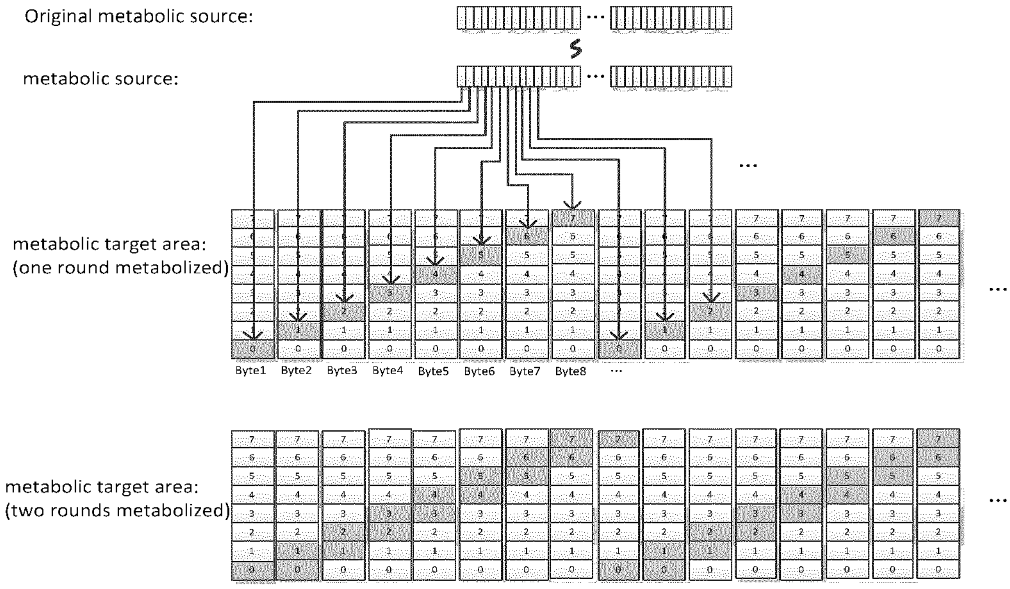
Original metabolic source:
metabolic source:
metabolic target area:
(one round metabolized)
Byte1 Byte2 Byte3 Byte4 Byte5 Byte6 Byte7 Byte8
metabolic target area:
(two rounds metabolized)

Fig. 5

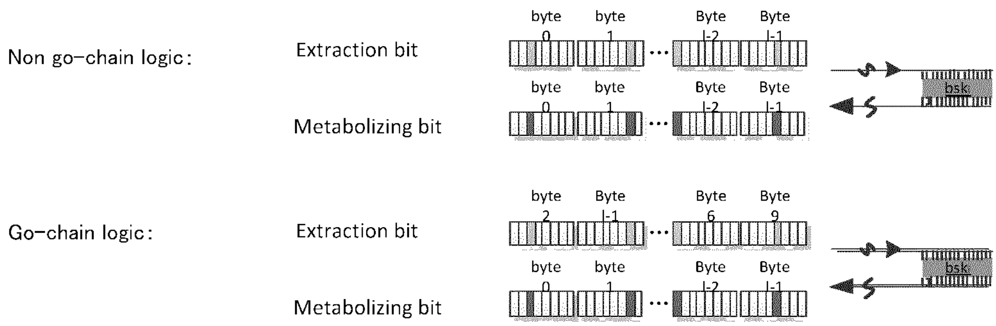
Non go-chain logic:
Extraction bit
Metabolizing bit
byte 0
byte 1
Byte l-2
Byte l-1
bsk
Go-chain logic:
Extraction bit
Metabolizing bit
byte 2
Byte l-1
Byte 6
Byte 9
byte 0
byte 1
Byte l-2
Byte l-1
bsk

Fig. 6

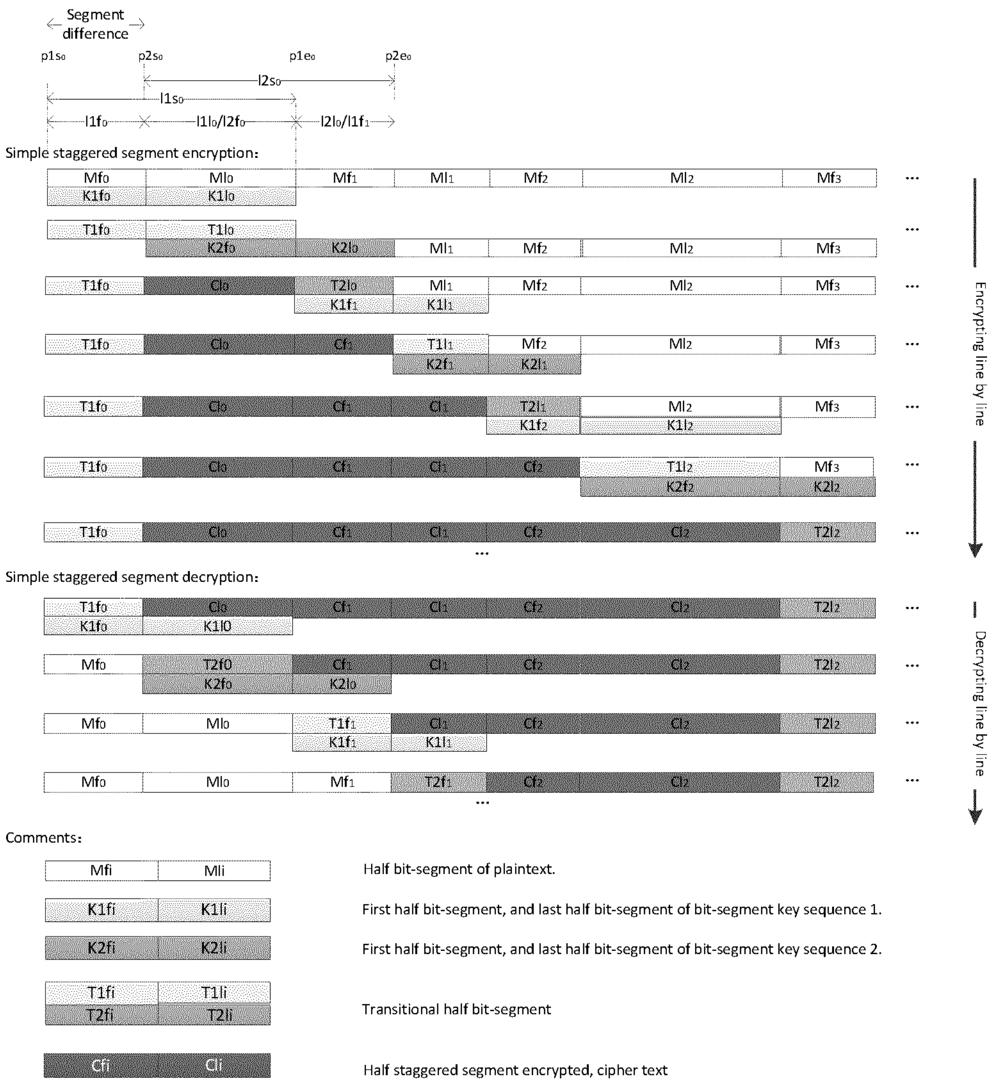
Segment difference
Simple staggered segment encryption:
Simple staggered segment decryption:
Encrypting line by line
Decrypting line by line
Comments:
Half bit-segment of plaintext.
First half bit-segment, and last half bit-segment of bit-segment key sequence 1.
First half bit-segment, and last half bit-segment of bit-segment key sequence 2.
Transitional half bit-segment
Half staggered segment encrypted, cipher text

Fig. 7

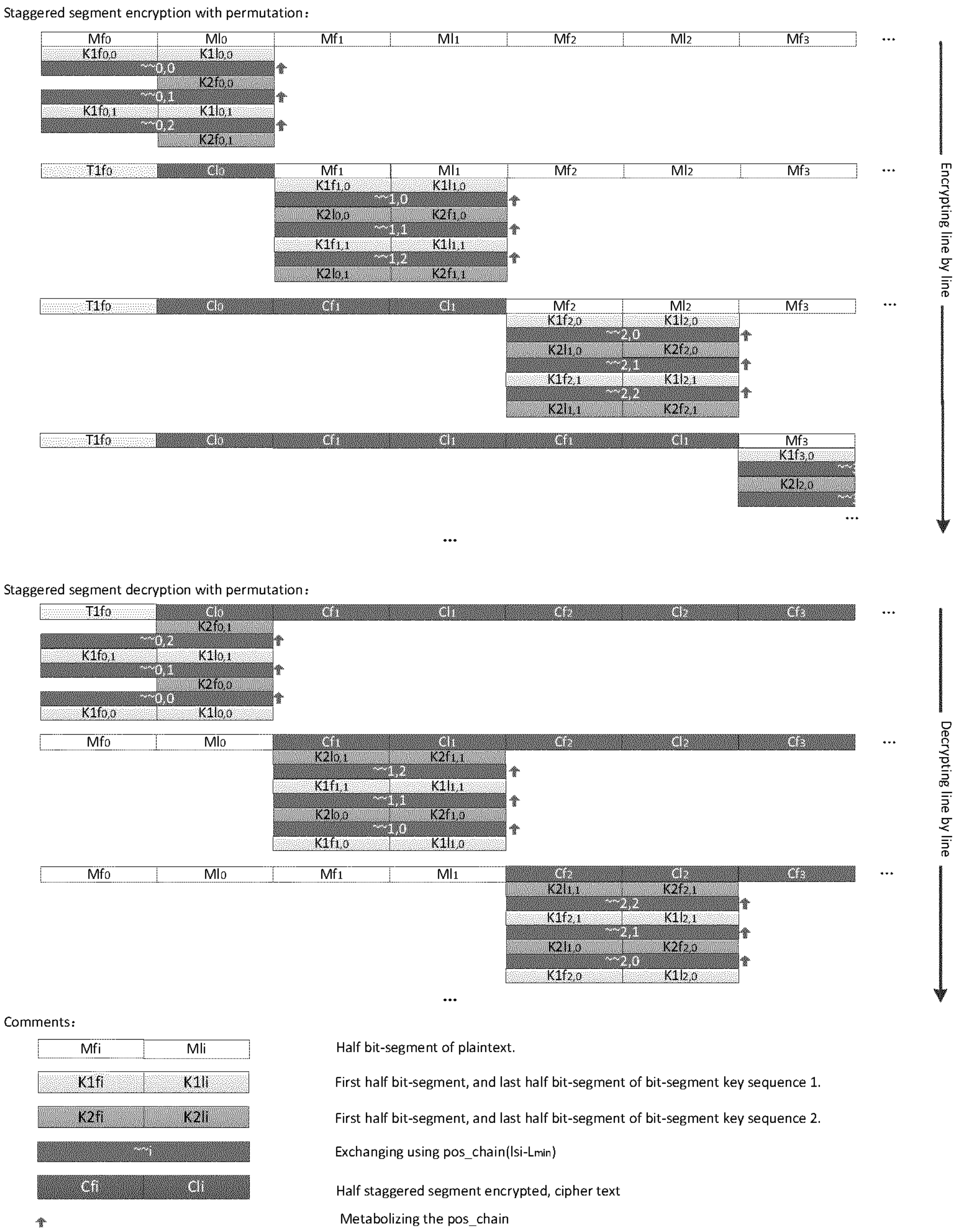
Staggered segment encryption with permutation:
Encrypting line by line
Staggered segment decryption with permutation:
Decrypting line by line
Comments:
Half bit-segment of plaintext.
First half bit-segment, and last half bit-segment of bit-segment key sequence 1.
First half bit-segment, and last half bit-segment of bit-segment key sequence 2.
Exchanging using pos_chain(lsi-Lmin)
Half staggered segment encrypted, cipher text
Metabolizing the pos_chain

Fig. 8

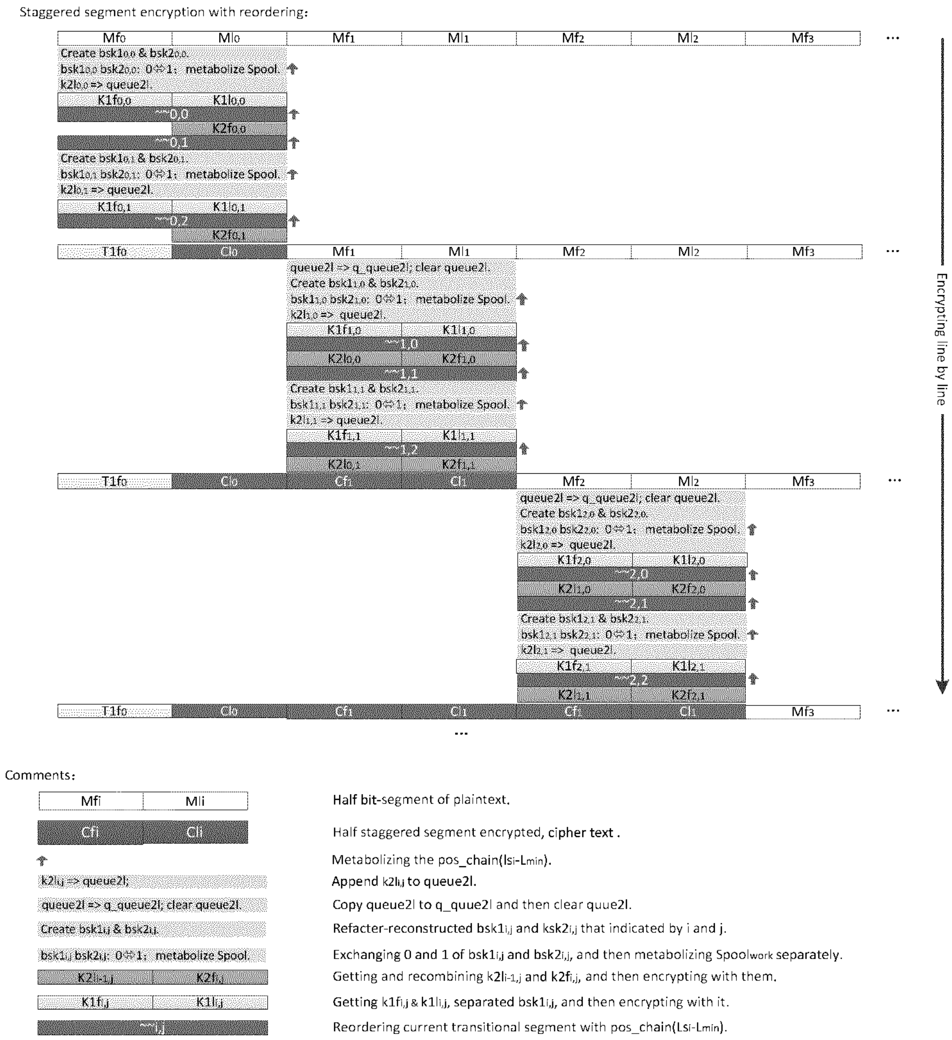
Staggered segment encryption with reordering:
Encrypting line by line
Comments:
Half bit-segment of plaintext.
Half staggered segment encrypted, cipher text .
Metabolizing the pos_chain(lsi-Lmin).
Append k2li,j to queue2l.
Copy queue2l to q_quue2l and then clear quue2l.
Refacter-reconstructed bsk1i,j and ksk2i,j that indicated by i and j.
Exchanging 0 and 1 of bsk1i,j and bsk2i,j, and then metabolizing Spoolwork separately.
Getting and recombining k2li-1,j and k2fi,j, and then encrypting with them.
Getting k1fi,j & k1li,j, separated bsk1i,j, and then encrypting with it.
Reordering current transitional segment with pos_chain(Lsi-Lmin).

Fig. 8'-1

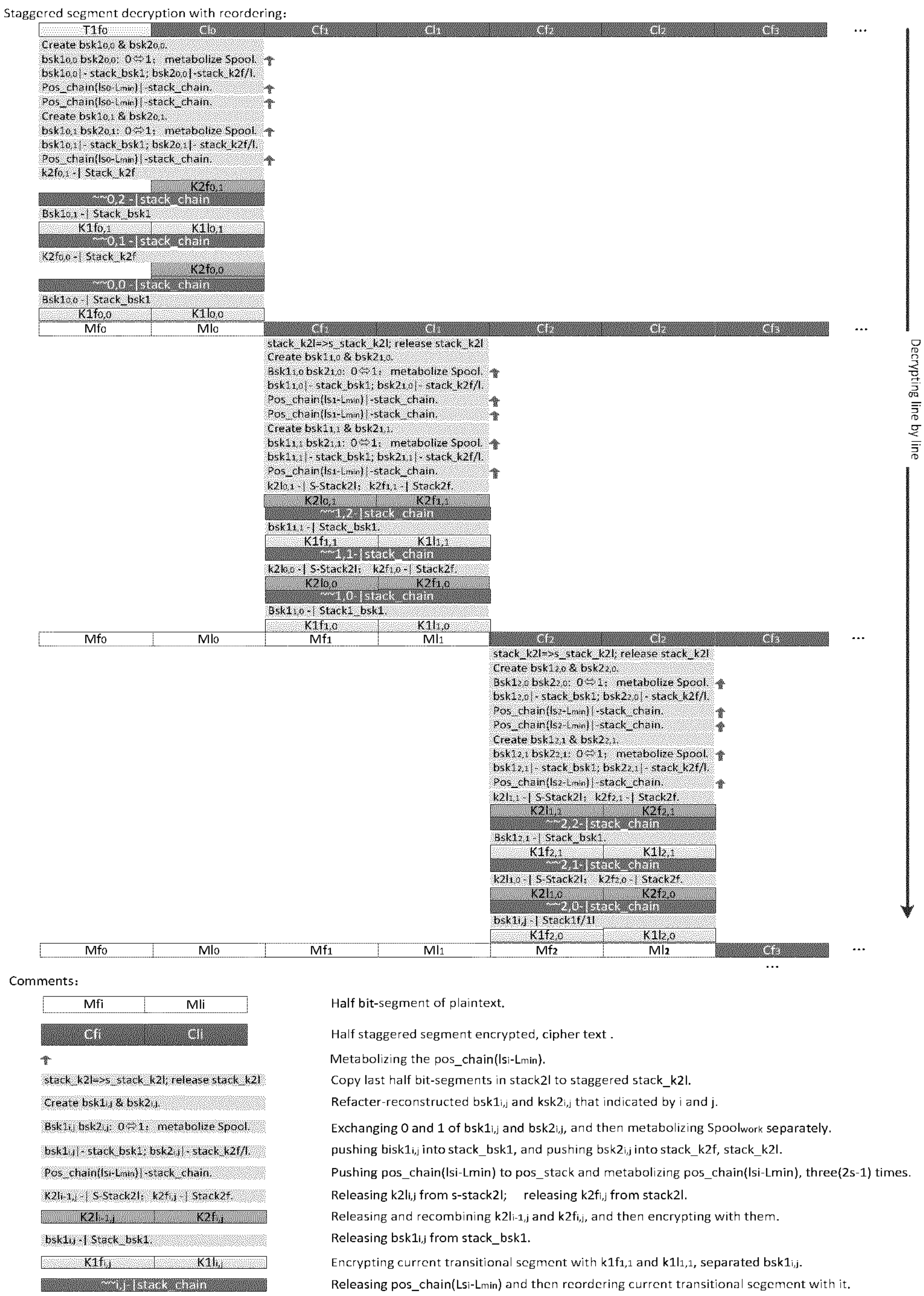
Staggered segment decryption with reordering:
T1f0
Cl0
Cf1
Cl1
Cf2
Cl2
Cf3
Decrypting line by line
Mf0
Ml0
Mf1
Ml1
Mf2
Ml2
Comments:
Mfi
Mli
Half bit-segment of plaintext.
Cfi
Cli
Half staggered segment encrypted, cipher text .
Metabolizing the pos_chain(lsi-Lmin).
stack_k2l=>s_stack_k2l; release stack_k2l
Copy last half bit-segments in stack2l to staggered stack_k2l.
Create bsk1i,j & bsk2i,j.
Refacter-reconstructed bsk1i,j and ksk2i,j that indicated by i and j.
Bsk1i,j bsk2i,j: 0⇔1; metabolize Spool.
Exchanging 0 and 1 of bsk1i,j and bsk2i,j, and then metabolizing Spoolwork separately.
bsk1i,j|- stack_bsk1; bsk2i,j|- stack_k2f/l.
pushing bisk1i,j into stack_bsk1, and pushing bsk2i,j into stack_k2f, stack_k2l.
Pos_chain(lsi-Lmin)|-stack_chain.
Pushing pos_chain(lsi-Lmin) to pos_stack and metabolizing pos_chain(lsi-Lmin), three(2s-1) times.
K2li-1,j -| S-Stack2l; k2fi,j -| Stack2f.
Releasing k2li,j from s-stack2l; releasing k2fi,j from stack2l.
K2li-1,j
K2fi,j
Releasing and recombining k2li-1,j and k2fi,j, and then encrypting with them.
bsk1i,j -| Stack_bsk1.
Releasing bsk1i,j from stack_bsk1.
K1fi,j
K1li,j
Encrypting current transitional segment with k1f1,1 and k1l1,1, separated bsk1i,j.
~~i,j-|stack_chain
Releasing pos_chain(Lsi-Lmin) and then reordering current transitional segement with it.

Fig. 8'-2

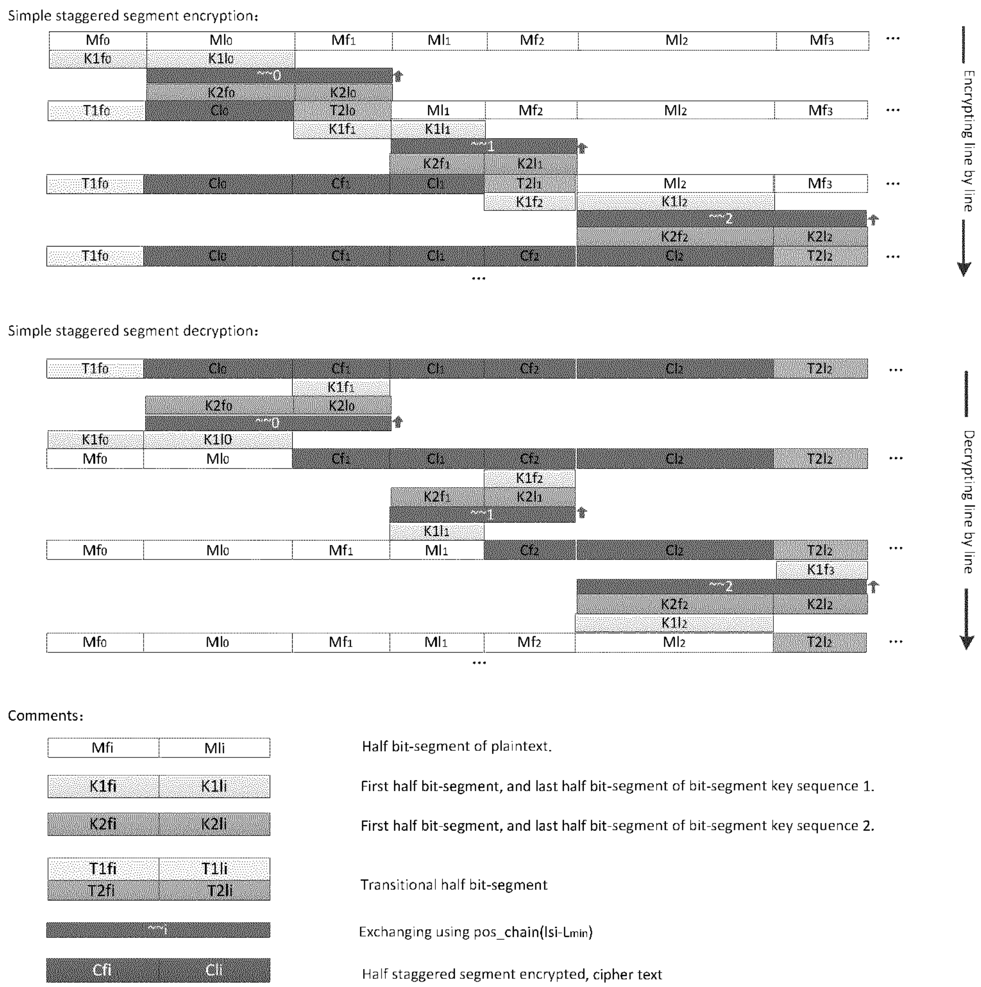
Simple staggered segment encryption:
Encrypting line by line
Simple staggered segment decryption:
Decrypting line by line
Comments:
Mfi Mli
Half bit-segment of plaintext.
K1fi K1li
First half bit-segment, and last half bit-segment of bit-segment key sequence 1.
K2fi K2li
First half bit-segment, and last half bit-segment of bit-segment key sequence 2.
T1fi T1li T2fi T2li
Transitional half bit-segment
Exchanging using pos_chain(lsi-Lmin)
Cfi Cli
Half staggered segment encrypted, cipher text

**Fig. 9**

## INTERNATIONAL SEARCH REPORT

International application No.
**PCT/CN2021/102451**

**A. CLASSIFICATION OF SUBJECT MATTER**

H04L 9/16(2006.01)i

According to International Patent Classification (IPC) or to both national classification and IPC

**B. FIELDS SEARCHED**

Minimum documentation searched (classification system followed by classification symbols)

H04L H04W H04B

Documentation searched other than minimum documentation to the extent that such documents are included in the fields searched

Electronic data base consulted during the international search (name of data base and, where practicable, search terms used)

WPI, EPODOC, CNPAT, CNKI: 混沌, 序列, 伪随机, 加密, bit, 比特, 错段, 错位, 代谢, 密钥, 逐段, 逐位, 每段, 每位, 叠加, 相加, 合并, chaos, sequence, pseudo, encrypt, section, iterative, key, add, combine

**C. DOCUMENTS CONSIDERED TO BE RELEVANT**

| Category* | Citation of document, with indication, where appropriate, of the relevant passages | Relevant to claim No. |
|---|---|---|
| A | CN 107196760 A (XU, Zhineng) 22 September 2017 (2017-09-22) description paragraphs [0002]-[0008], claims 1-10 | 1-8 |
| A | CN 108377180 A (HARBIN UNIVERSITY OF SCIENCE AND TECHNOLOGY) 07 August 2018 (2018-08-07) entire document | 1-8 |
| A | US 2013142323 A1 (CHIARELLA, Joseph P.) 06 June 2013 (2013-06-06) entire document | 1-8 |
| A | 陈龙彪 等 (CHEN, Longbiao et al.). "基于混沌理论的图像加密技术研究 (2 Research on Image Encryption Technology Based on Chaos Theory)" *计算机测量与控制 (Computer Measurement & Control)*, 25 August 2019 (2019-08-25), entire document | 1-8 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 August 2021** | **26 August 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/102451**

| Patent document cited in search report | | | Publication date (day/month/year) | Patent family member(s) | | | Publication date (day/month/year) |
|---|---|---|---|---|---|---|---|
| CN | 107196760 | A | 22 September 2017 | KR | 20200015484 | A | 12 February 2020 |
| | | | | JP | 2020517209 | A | 11 June 2020 |
| | | | | WO | 2018192399 | A1 | 25 October 2018 |
| | | | | CA | 3060337 | A1 | 25 October 2018 |
| | | | | US | 2020195430 | A1 | 18 June 2020 |
| | | | | EP | 3614620 | A1 | 26 February 2020 |
| | | | | IN | 201917046753 | A | 17 January 2020 |
| | | | | SG | 11201909664 | A1 | 28 November 2019 |
| CN | 108377180 | A | 07 August 2018 | | None | | |
| US | 2013142323 | A1 | 06 June 2013 | US | 2013318340 | A1 | 28 November 2013 |
| | | | | US | 2013315388 | A1 | 28 November 2013 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201710249427